(19)

**Europäisches Patentamt**
**European Patent Office**
**Office européen des brevets**

(11)  **EP 4 571 565 A1**

(12)  **EUROPEAN PATENT APPLICATION**

(43) Date of publication:
**18.06.2025 Bulletin 2025/25**

(21) Application number: **24219482.7**

(22) Date of filing: **12.12.2024**

(51) International Patent Classification (IPC):
**G06F 40/103** (2020.01)    **G06F 40/131** (2020.01)
**G06F 40/16** (2020.01)    **G06F 40/186** (2020.01)
**G06F 40/216** (2020.01)    **G06F 40/35** (2020.01)
**G06F 40/44** (2020.01)    **G06F 40/56** (2020.01)

(52) Cooperative Patent Classification (CPC):
**G06F 40/103; G06F 40/131; G06F 40/16;**
**G06F 40/186; G06F 40/216; G06F 40/35;**
**G06F 40/44; G06F 40/56**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.12.2023 AU 2023282298**
             **15.12.2023 AU 2023282300**
             **15.12.2023 AU 2023282299**
             **15.12.2023 AU 2023282301**
             **08.05.2024 AU 2024203055**

(71) Applicant: **Canva Pty Ltd.**
**Sydney, New South Wales 2010 (AU)**

(72) Inventors:
* **Wu, Danny**
 **Sydney, 2010 (AU)**
* **Iqbal, Ahmad**
 **Sydney, 2010 (AU)**
* **Kelly, Max Diamond**
 **Sydney, 2010 (AU)**
* **Nothman, Joel**
 **Sydney, 2010 (AU)**
* **Stedman, Vaughan Paul**
 **Sydney, 2010 (AU)**
* **Cleary, Jackson Weekes**
 **Sydney, 2010 (AU)**

(74) Representative: **Chettle, John Edward et al**
**Venner Shipley LLP**
**200 Aldersgate**
**London EC1A 4HD (GB)**

(54) **SYSTEMS AND METHODS FOR PROCESSING DESIGNS**

(57)     Described herein is a computer-implemented method, system, and computer readable media for converting a source design in a first design category to a target design in a second design category. The method includes: processing the source design to identify a set of transfer design elements from the source design; generating a set of revised design elements based at least on the set of transfer design elements and the second design category; and generating the target design based on the set of revised design elements.

**EP 4 571 565 A1**

**Description**

**CROSS REFERENCE TO RELATED APPLICATION**

This application claims priority from the following Australian patent applications: 2023282298, 2023282300, 2023282299 and 2023282301, filed on 15 December 2023 and titled "Systems and methods for processing designs". It also claims priority from Australian patent application 2024203055 filed 08 May 2024 and titled "Systems and methods for processing designs". The entire contents of each of these applications is incorporated herein by reference.

**TECHNICAL FIELD**

The present disclosure is directed to various systems and methods for processing digital designs.

**BACKGROUND**

Computer applications for creating and working with digital designs exist. Some such applications may provide users with the ability to create different types of digital designs in different formats.

As one example, an application may provide functionality for a user to create what will be referred to as deck-format designs - e.g. designs that store content and associated metadata in a slide deck type format. As another example, an application may provide functionality for a user to create what will be referred to as document-format designs - e.g. designs that store content and associated metadata in a word-processing document type format.

In some situations, a user may wish to use a design they have created in one format as the basis for generating another design in a different format. For example, a user may wish to use content prepared in an original deck-format design as the basis for a document-format design.

**SUMMARY**

In a first aspect, the present invention provides a computer-implemented method for converting a source design in a first design category to a target design in a second design category, the method comprising: processing the source design to identify a set of transfer design elements from the source design; generating a set of revised design elements based at least on the set of transfer design elements and the second design category; and generating the target design based on the set of revised design elements.

In a second aspect, the present invention provides a computer processing system including: one or more processing units; and one or more non-transitory computer-readable storage media storing instructions, which when executed by the one or more processing units, cause the one or more processing units to perform the method of the first aspect described above.

In a third aspect, the present invention provides one or more non-transitory storage media storing instructions executable by one or more processing units to cause the one or more processing units to perform the method of the first aspect described above.

**BRIEF DESCRIPTION OF THE DRAWINGS**

In the drawings:

Fig. 1 is a block diagram of a networked environment in which embodiments of the present disclosure may be performed.

Fig. 2 is a block diagram of a computer processing system.

Fig. 3A depicts an example graphical user interface displaying a deck format design.

Fig. 3B depicts an example graphical user interface displaying a document format design.

Fig. 4 depicts an example design conversion graphical user interface.

Fig. 5 is a flowchart depicting an example method for converting a design in a first design category to a design in a second design category.

Fig. 6 is a flowchart depicting an example method for generating a set of transfer design elements according to some embodiments of the present disclosure.

Fig. 7 is a flowchart depicting an example method for generating revised design content according to some embodiments of the present disclosure.

Fig. 8 is a flowchart depicting an example method for generating a target design based on the revised content according to some embodiments of the present disclosure.

Fig. 9 is a flowchart depicting an example method for generating a design plan descriptor from the revised content according to some embodiments of the present disclosure.

Fig. 10 is an example target design generated according to some embodiments of the present disclosure.

Fig. 11 depicts another example design conversion graphical user interface.

Fig. 12 is a flowchart depicting another example method for converting a design in a first design category to a design in a second design category using an intermediate system prompt.

Fig. 13 is a flowchart illustrating an example method for generating revised design content based on the intermediate system prompt according to some embodiments of the present disclosure.

Fig. 14 is a flowchart illustrating an example method for generating revised design content and style guidance information according to some embodiments of the present disclosure.

While the description is amenable to various modifications and alternative forms, specific embodiments are shown by way of example in the drawings and are described in detail. It should be understood, however, that the drawings and detailed description are not intended to limit the invention to the particular form disclosed. The intention is to cover all modifications, equivalents, and alternatives falling within the scope of the present disclosure.

## DETAILED DESCRIPTION

In the following description, numerous specific details are set forth in order to provide a thorough understanding of the present invention. It will be apparent, however, that the present invention may be practiced without these specific details. In some instances, well-known structures and devices are shown in block diagram form in order to avoid unnecessary obscuring.

As discussed above, computer applications for use in creating and working with digital designs exist. Such applications may provide mechanisms for a user to create a design, edit the design by adding content to it, and output the design in various ways (e.g. by saving, displaying, printing, publishing, sharing, or otherwise outputting the design).

As also discussed above, such a computer application may also provide a user with the ability to create and work with designs in different categories, such as presentations, posts, invitations, emails, etc. The present disclosure describes two different design formats that will be referred to as document-format designs (documents for short) and deck-format designs (decks for short). Most available design categories fall within one of these two main design formats. For example, the design categories emails, blog posts, summaries, letters, etc. fall within the document-type format whereas design categories such as presentation slides, social media posts, invitations, cards, etc. fall within the deck-type format.

Aspects of the present disclosure provide methods and systems for converting a first design in a first design category to a second design in a second design category. The first design is referred to as a 'source' design and the second design is referred to as a 'target' design in this disclosure. Converting the source design into the target design involves a change in the content of the design - i.e., one or more source design elements may be replaced by revised target design elements. In some embodiments, converting the source design into a target design may also involve a change in the format of the design - e.g., the design may be converted from a document-format design into a deck-format design or vice versa. For example, according to some aspects of the present disclosure, a deck format source design may be converted into a document format target design. Similarly, a document-format source design can be converted into a deck-format design.

Documents and decks are described in detail below.

In the context of the present disclosure, a design includes content and has a design format. In particular, the present disclosure refers to document-format designs and deck-format designs. For ease of reference, a document-format design may be referred to as a document and a deck-format design may be referred to as a deck.

As described herein, a design may include various different types of content. For example, content may be fill type content that defines a fill such as a solid colour, a colour gradient, a graphic (e.g. a vector graphic), an image (e.g. a raster image), a video, an audio file, or an alternative type of fill. As another example, content may be text-type content (e.g. a sequence of one or more characters). As another example, content may be chart content (e.g. a line chart, bar chart, or an alternative type of chart). Alternative content types are possible.

A deck-format design includes an ordered set of one or more explicitly defined pages. The content of a deck is defined by one or more design elements (elements for short). Generally speaking, each design element defines (or is associated with) content (e.g. text, one or more fills, a chart, a table, an audio file, or other content) as well as data that defines which page of the deck the element (and, therefore, its associated content) is on, where on that page the content is positioned, and how the content is displayed.

In a deck, each element is associated with explicit position data. An element's position data includes a particular page and a particular position on that particular page that the element's content is to be displayed at. In a deck, adding a new element or removing an existing element does not generally change the position of other elements in the deck. Moreover, unless elements are grouped together (or automatic reflow operations are implemented), adjusting the position of one element will not generally cause the positions of other elements to change.

The deck format may be appropriate for content that is predominantly visual and has relatively low amounts of text. This format may also be appropriate where specific and precise positioning of content (independently of other content) is of particular importance. Examples of such designs may include, for example, presentation slides, what will typically be single-page deck designs such as posters, social media posts, invitations, and/or other such designs. A deck could, however, be used to display large amounts of solely text content if desired (e.g., in the form of a brochure or menu).

In the context of the present disclosure, the content of a document-format design on the other hand is defined by an ordered set of one or more design items (items for short). Each item defines (or is associated with) content (e.g. text, a fill, a chart, or other content) as well as data that defines how that content is displayed.

In a document, items are not generally associated with explicit position data. Instead, the position at which the content of an item is displayed is relative to any preceding items in the document's ordered set of items. Accordingly, in a document adding a new item or removing an existing item generally will change the position of other (subsequent) items in the document. To illustrate this, consider a first item that defines the text "TEXT." If a second item defining (for example) the text "PLACEHOLDER" is added to the document before the first item, the second item will (in a standard English language context) cause the text of the first item to be displayed further to the right and/or further down the page. Similarly, if the "PLACEHOLDER" text item was then deleted from the document, this would cause the text of the first item to be shifted to the left and/or up the page.

Documents may be appropriate for content that includes relatively large amounts of text and/or where the independent positioning of content is not required or is not important. This may be the case where relative positioning is preferable - for example to allow for content to move (or reflow) as new content is added, content is deleted, and/or the size of the document (e.g. its width - or the size of a window in which the document is displayed) changes. Examples of such designs may include, for example, emails, letters, blogs, papers, (and other "word-processing" type documents).

*Example deck-format design*

In order to illustrate deck-format designs, a simplified deck-format design data schema will be described by way of an example. Alternative schemas are possible.

In the present example, a deck is defined by a deck record. A deck record is a set of key/value pairs (e.g., a map or dictionary) that define attributes of the deck. A deck record may define various deck attributes, such as one or more of the following:

Table A: example deck record

| Example attribute | Description | Example value |
|---|---|---|
| Deck ID | A unique identifier of the deck-format design. | "deckId": "abc123", |
| Dimensions | Default dimensions (e.g. width and height) of the pages of the deck. | "dimensions": {<br>    "width": 1080,<br>    "height": 1080<br>}, |
| Design category | An identifier of a design type. | "Category": "whiteboard", |

(continued)

| Example attribute | Description | Example value |
|---|---|---|
| Page data | An array of page records (described further below). | "pages": [<br>  {*page record 1*},<br>  ...,<br>  {*page record n*}<br>] |

In the present example, a deck record provides various deck-level attributes. These include an identifier, default page dimensions, and a design category. In the present example, the design category attribute may take a value that identifies a type of the deck-format design. The available design categories will depend on the design platform, and different design categories may be associated with various default properties - e.g., default dimensions, default colour palettes, default font palettes, default publication options, default shape (or other asset) sets, and/or other default properties. For example, an "Instagram Post" category design may be provided with default dimensions of 1080x1080 pixels. By way of example, design categories such as the following may be made available: whiteboard; presentation; mobile presentation; desktop presentation; pitch; flowchart; poster; social media post; brochure; menu, or invitation card.

Additional and/or alternative deck-level attributes are possible (for example attributes such as a version identifier, a creation date, a creator, and/or other attributes).

In the present example, the deck record also includes page data (if it includes more than one page) - an ordered set (e.g., an array) of one or more page records. Each page record defines a page of the deck. In this example, a page record's position in the ordered set serves to identify that page and also define its position in the deck (e.g., a page at array index *n* appears after a page at array index *n*-1 and before a page at array index *n*+1).

In the present example, each page record is also a set of key/value pairs. Example page record attributes are as follows:

Table B - example page record

| Example attribute | Description | Example value |
|---|---|---|
| Background | Defines a page background | "background": {*background fill*}, |
| Element data | Defines elements that have been added to the page | "elements": [<br>  {*design element record 1*},<br>  ...,<br>  {*design element record n*}<br>] |

In this present example, each page record defines a background and element data.

The background is an optional attribute that defines any background fill for the page. A background fill may, for example, be a solid colour, a colour gradient, an image, or an alternative fill. In other implementations, a page background may be defined as an element of the design page (e.g., as the first element of the page's elements array discussed below) rather than a page-level attribute.

The element data of a page record is an ordered set (e.g., an array) of design element records. Each design element record defines an element that has been added to the page. Accordingly, in the present example the page record in which a design element record appears defines the particular page that element belongs to. Furthermore, in this example, a design element record's position in a page's element array serves to identify that element and defines its depth (or z-index) on the page. For example, an element at array index *n* is positioned above an element at array index n-1 and below an element at array index *n*+1. Element depth becomes relevant where non-transparent elements (or non-transparent portions of elements) overlap one another in the x/y plane. Element depth may be alternatively handled, however, for example, by storing depth as an explicit element attribute.

Generally speaking, an element defines content that has been added to a page of a deck - e.g. by copying/importing content from one or more libraries (e.g. libraries of images, animations, videos, etc.); by drawing/creating using one or more design tools (e.g. a text tool, a line tool, a rectangle tool, an ellipse tool, a curve tool, a freehand tool, and/or other design tools); or by otherwise adding content to a deck page.

In the present example, different design element types are provided. The actual element types provided - and the attributes required or available to define those elements - will depend on implementation. In the present example, however, text, shape, table, chart, and group type elements are provided. These element types are described below.

All element types include position data that defines an element's position on the page the element belongs to. In the present example, an element's position is defined by an (x,y) coordinate pair.

All element types also include size data that defines an element's size. In the present example, an element's size is defined by a width value and a height value.

An element's position and size data can be used to determine its bounding box. In the present disclosure, an element's bounding box can be defined by a set of four values: a top or minY coordinate (e.g. the element's y position); a left or minX coordinate (e.g. the element's x position); a bottom or maxY coordinate (e.g. the element's height); and a right or maxX coordinate (e.g. the element's width). For example, if an element's position data defines an (originX, originY) coordinate pair and its size data defines a width and a height, the bounding box values may be calculated (in the context of the coordinate system described above) as:

$$minX = originX;$$

$$maxX = originY + width;$$

$$minY = originY;$$

$$maxY = originY + height.$$

In the present disclosure, the bounding boxes of shape, chart, and table type elements correspond to the extents of the element's visible content. For text elements, however, the bounding box may not necessarily correspond to the extents of the text content. In particular, the text content of a text element may expand beyond the element's bounding box (or not occupy the entirety of the element's bounding box). For text elements, an additional text-width attribute may be defined which defines the width at which text will wrap and, therefore, a text content mask. For text elements, the text-width attribute may be less than, equal to, or greater than the element's width attribute, and as a consequence, the content mask of a text element may extend beyond the text element's bounding box (as determined by its size and position attributes). In other implementations, a separate text-width attribute need not be used - in which case a text element's width attribute is used to determine the text-width attribute (e.g. text-width = width, or text-width = width - a text margin value).

The element types may also include rotation data that defines an element's rotation. In the present example, an element's rotation is defined by a rotation value that defines a number of degrees that the element is rotated (e.g., 0 = no rotation). In the present embodiments, any rotation applied to an element is about a centre of the element's bounding box.

In addition to attributes that define an element's position, size, and/or rotation, different element types provide for additional attributes that define the content that the element is used to display. The following provides an example of such attributes.

In one example, a text element is used to display text content and may include (or be associated with):

- Content data which, for a text element, is text data defining the text content itself (e.g. a set of one or more characters). Text characters may include control characters - e.g. defined character sequences (such as "\n" indicating a line break).

- Format data that, for a text element, is text format data that defines how the text characters are to be displayed. Text format data may include data such as font type, font colour, font style, font size, and/or other format data. Text format data include block level format data, which applies to the text of an entire element and/or inline format data, which applies to specific characters of spans of characters of the text content. Format data may also include list attributes which describe whether the element's text is arranged in a list of items or not (and, if so, may also define particular list markers - e.g. bullet points, consecutively increasing numbers, or other markers).

- Position, size, and rotation data as described above.

In certain embodiments, a text element may also include (or be associated with) text hierarchy level data that defines a hierarchy level (or levels) for the text characters. Text hierarchy levels are described further below.

In another example, a shape element is used to display a fill and may include (or be associated with):

- Content data that, for a shape element, is fill data that identifies or defines the fill content itself. Fill content may, for example, be a solid colour, a colour gradient, a graphic (e.g. a vector graphic), an image (e.g. a raster image), a video, or an alternative fill.

- Path data that defines a shape path, e.g. an external path or frame for the shape. The path data may, for example, define a geometric shape (e.g. a rectangle, square, triangle, circle, ellipse, or other geometric shape) or an arbitrary closed path (e.g. a hand-drawn path). In the present embodiments, any transparency of a shape's content overrides the path, in the sense that the path acts to mask the media's existing mask.

- Fill role data. For example, a value indicating whether the fill content is what will be referred to as a complete fill or a partial fill. In the present disclosure, a complete fill is a fill that does not include any transparent (or cut-out) regions while a partial fill is a fill that does include one or more transparent (or cut-out) regions.

- Position, size, and rotation data as described above.

Certain shape elements may have additional attributes depending on the type of fill the shape element accommodates and/or other factors. By way of example, some or all shape elements may also include one or more of:

- Scaling data that defines whether a shape's fill stretches in a vertical direction, stretches in a horizontal direction, or scales uniformly in both directions.

- Content size/position/rotation data that define the size/position/rotation of the shape's fill within the shape's bounding box (i.e. separate to the size/position/rotation of the shape element as a whole). This can effect cropping.

- Key colour data, which describes a set of key colours of the shape. E.g., for certain images and animated images a set of key colours are defined which can then be used if the shape needs to be recoloured. In certain implementations, key colour data is stored for vector graphic images and animated images.

- Fill arrangement data. In certain implementations, a single shape element may provide an arrangement of multiple fills. In this case the multi-fill shape element may include fill arrangement data that defines how the multiple fills are arranged (e.g. as a grid or the like). In the present disclosure, if a shape element defines multiple fills each fill is processed as a distinct shape element. In this case, the size and position attributes of each shape element are based on the parent (multi-fill) shape element's size and position attributes and the fill arrangement data. Other attributes (e.g. rotation and transparency) are inherited from the parent.

- Trim data. For example, for a shape that includes a video fill, trim data may define a start time and/or end time for the playback of that fill.

In the present example, a table element is used to display a table and may include (or be associated with):

- Table structure data, which defines a structure of the table. The table structure data may, for example, define a number of columns and a number of rows. The table structure data may also define specific column and/or row attributes (e.g. column widths and/or row heights, expressed as either absolute values or as a proportion of the table's total width/height), or may omit such data (in which case column widths and row heights may be automatically determined based on the table's content).

- Content data which, for a table element, is cell data defining the content of each table cell. The cell data for a given cell may be text data (describing text content, as described above) or fill data (describing fill content, as described above).

- Format data. The format data for a table element may include cell format data, which describes a cell format of each table cell. Cell format may include attributes such as background colour, font family, font weight, text colour, text decoration (e.g. underline), text style (e.g. italics), and/or other cell format attributes. The format data for a table may also include structural format data defining, for example, table and cell borders (e.g. line weight, line colour, line style).

- Position, size, and rotation data as described above.

In the present example, a chart element is used to display a chart and may include (or be associated with):

- Content data which, for a chart element, is chart data defining one or more data series that are to be presented in the chart.

- Chart type data defining a chart type that is to be used to display the one or more data series (e.g. a line chart, bar chart, pie chart, or an alternative form of chart).

- Format data. Chart format data may include, for example, a set of data series formats (and data associating each data series format with a data series of the chart). A data series format may define, for example, a data series colour, a data series fill pattern, and/or other format attributes. Chart format data may also include text format data in respect of chart labels or other text.

- Position, size, and rotation data as described above.

In the present example, a group element is used to group other elements together and may include (or be associated with):

- Content data which, for a group element, is a set of one or more design element records each of which defines a member element of the group.

- Position, size, and rotation data as described above. In the present embodiments, the position of an element that is a member of a group is treated as being relative to the position/size/rotation of the member element's parent element. To illustrate this, consider a group element (G1) that has a position of (10,10) and includes a member element (M1) that also has a position of (10,10). In this case, the final position of element M1 on a page will be (20,20) (i.e. element M1's position of (10,10) is a position within group element G1 and relative to the position of element G1). If the group element G1 was then moved to position (30, 40), the new position of member element M1 would be (40,50) (again, relative to the parent element's position).

Element groups may be handled in different ways. For example, each design element record may include a group identifier attribute that includes a value that indicates a particular element group that the element belongs to (if any). In this case, of one element of a particular group is resized or repositioned, any other elements that belong to that same group are also resized/repositioned to maintain their relative size/position in the group.

Additional and/or alternative element types to those described above may be provided. Further, a given element type may include attributes defining additional or alternative features of the element.

As can be seen from the above example, each element of a deck is associated with a particular page of the deck and includes position data that determines where on a deck page (in two-dimensional space) the element - and, therefore, the content associated with the element - is to be positioned. Moreover, with the exception of elements that are part of an element group (and are therefore associated with a parent element), an element's two-dimensional (e.g., x,y) position on its page is independent to any other element's that are added to that page (or the deck in general). That is, an element's two-dimensional position is not changed by adding additional elements to, or removing other elements from, the deck. If a new element is added on top of or underneath an existing element this may (depending on opacity settings) change the appearance of or occlude the existing element, however this does not change the page on which existing element appears or the existing element's position on that page.

*Example document-format design*

In order to illustrate document-format designs (documents), an example document-format will be described. Alternative document-formats are, however, possible.

In the present example, a document is defined by a document record. A document record includes an ordered sequence (such as an array or other ordered set) of content data. In the present example, this will be referred to as an ordered sequence of document element records (or elements). While document element records are in some respects similar to design element records they are not the same. To avoid potential confusion, document element records may be referred to as item records (or items for short) (and document elements as defined by those records may be referred to as items). E.g.:

$$docContent: [\{item\ record\ 1\}, \{item\ record\ 2\}, \dots \{item\ record\ n\}]$$

An item defines content that has been added to a document. Different item types may be provided for different types of content that are able to be added to a document. The types of items available will depend on the system in question and the types of content that are permitted in a document. In the present embodiments, and by way of example, text, shape, table, and chart item types are provided.

In the present example, a text item is used to display text content. A text item (which may be referred to as a text block) generally defines a vertically delineated block of text (e.g. a paragraph, a list item, or an alternatively delimited block of text). A text item may include (or be associated with):

• Text data. This may be similar to (or the same as) text element text format data as described above.

• Text format data. This may be similar to (or the same as) text element text format data as described above.

A text item may also include (or be associated with) text hierarchy level data that defines a hierarchy level (or levels) for the text characters. Text hierarchy levels are described further below.

In the present example, a shape item is used to display a fill and may include (or be associated with):

• Content data. This may be similar to (or the same as) shape element content data as described above. A shape item can be limited to defining a single fill or multiple fills (though other modifications to the processing described below may be necessary to allow for this).

• Path data. This may be similar to (or the same as) shape element path data as described above.

• Fill role data. This may be similar to (or the same as) shape element fill role data as described above.

In the present example, a table item is used to display a table and may include (or be associated with):

• Table data. This may be similar to (or the same as) table element table data as described above.

• Cell data. This may be similar to (or the same as) table element cell data as described above.

In the present example, a chart item is used to display a chart and may include (or be associated with):

• Chart data. This may be similar to (or the same as) chart element chart data as described above.

• Chart type data. This may be similar to (or the same as) chart element chart type data as described above.

• Chart format data. This may be similar to (or the same as) chart element chart format as described above.

As can be seen, in a document the two-dimensional position of the content associated with a given item (and the page on which that content appears) depends on any preceding items (i.e. those that are before the particular item in the items array) and the particular item's attributes (e.g. flow, width height, and/or margin values). Moreover, the position of a particular item's content- and/or the page on which the content appears - can vary depending on what other items are added to or removed from the document. Furthermore, in the present embodiments document items are not associated with explicit position data (e.g. (x,y) coordinates or other explicit two-dimensional position data) in the same way that deck elements are.

In addition to content data, a document record may include document metadata. Such metadata may, for example, be similar to or the same as the deck-level attributes of a deck as described above (and include attributes such as a document identifier, document creator, document creation date and the like).

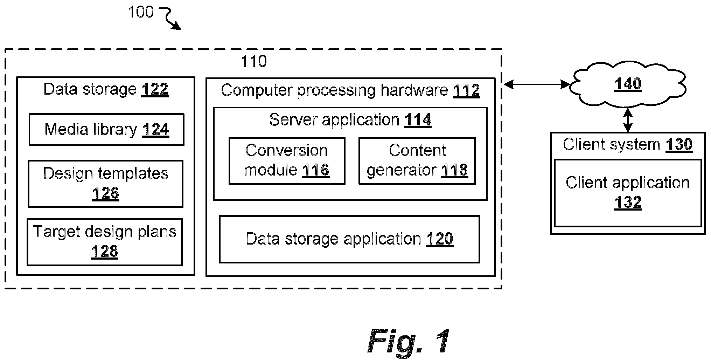

Fig. 1 and the associated description of Australian patent application 2023210536, titled "Systems and methods for processing designs" and filed on 31 July 2023 provide example deck and document format designs. The content of Australian patent application 2023210536 is hereby incorporated by reference in its entirety.

_Text hierarchy levels_

Certain processing described herein makes use of text hierarchy levels.

A text hierarchy level provides a measure of the significance of text content. Continuing with the examples above, the text content of a deck includes characters defined by (or associated with) the text elements of that deck, while the text content of a document includes characters defined by (or associated with) text type items of that document.

Text hierarchy levels may be represented in various ways. In the present embodiments, a numeric hierarchy is used with lower values indicating text of greater significance. For example, level 1 text may correspond to a title, level 2 text to a sub-title, etc.

Text hierarchy levels may be determined in various ways. In some embodiments, text hierarchy levels may be explicitly defined for any text. For example, when a user is adding text to a deck or a document they may explicitly set or apply a hierarchy level to that text (and if no hierarchy level is set then a default hierarchy level may be assigned).

In alternative embodiments, text hierarchy levels may be automatically determined by processing a given document or deck. Generally speaking, this may involve extracting the text content from a document or deck and analysing the text to determine different text hierarchy levels based on certain format attributes and/or text position information. One example method for analysing text to determine a set of text hierarchy levels is described with reference to method 3300 of Australian patent application 2023210536. Alternative methods may be used.

*Example design platform*

The features of the present disclosure are described in the context of a design platform. In the described embodiments, this platform includes server-side and client-side applications, which operate to perform the various techniques described herein. One example of such a platform will be described with reference to networked environment 100 of FIG. 1.

Networked environment 100 includes a server environment 110 and a client system 130 which communicate via one or more communications networks 140 (e.g. the Internet).

The server environment 110 includes computer-processing hardware 112 (discussed below) on which applications that provide server-side functionality to client applications (such as client application 132 described below) execute. In the present example, server environment 110 includes a server application 114, and a data storage application 120.

The server application 114 executes to provide a client application endpoint that is accessible over communications network 140. For example, where server application 114 serves web browser client applications the server application 114 will be a web server which receives and responds (for example) to HTTP requests. Where server application 114 serves native client applications, server application 114 will be an application server configured to receive, process, and respond to specifically defined API calls received from those client applications. The server environment 110 may include one or more web server applications and/or one or more application server applications allowing it to interact with both web and native client applications.

The server application 114 (and or other applications of server environment 110) facilitate various functions related to creating and editing digital designs. This may include, for example, document and design creation, editing, storage, searching, retrieval, publication, and viewing. The server application 114 (and/or other applications) may also facilitate additional functions that are typical of server systems - for example user account creation and management, user authentication, and/or other server side functions.

In addition to the above, the server application 114 facilitates the conversion of a source design (of a first design category) into a target design (of a second design category). To perform these functions, the server application 114 includes a number of software modules, which provide various functionalities and interoperate to convert the designs between various different categories. These modules are discussed below and include: a conversion module 116, and a content generator 118.

The conversion module 116 is configured to receive a request to convert a source design into a target design of a different design category, extract and linearize content from the source design, communicate a request for revised content to the content generator 118, receive revised content from the content generator 118 and generate the target design based on the revised content and the requested design category.

The content generator 118 module is configured to receive the request for revised content from the conversion module 116, generate the revised content, and communicate it back to the conversion module 116. In some embodiments, the content generator 118 is a generative ML model that is configured to generate outputs based on input prompts. In particular, the ML model may be configured to receive an input prompt that includes source design content and configuration data (that includes one or more design parameters) and generate revised content based on the source design content and the configuration data.

In some embodiments, the content generator 118 may be a large language model (LLM) that is trained as a general-purpose ML model that can be used to generate different types of text-based outputs. In the present case, if a general-purpose ML model is used, it is additionally trained to perform specific tasks. For example, the general-purpose ML model may be trained to generate revised text from a prompt. In other embodiments, the ML model may be a more specific model that is trained to generate the outputs described above.

Furthermore, in some examples, the content generator 118 may be associated with and owned by the same party that operates the server environment 110. In this case, the content generator 118 may be part of the server environment 110 (as shown in Fig. 1). In other examples, the content generator 118 may be owned by a third party that is independent of the party that owns the server environment 110. Examples of third party LLMs include OpenAI's ChatGPT4, and Google's Bard. In such cases, the content generator 118 may be independent of server environment 110 and may be hosted by a different server system (not shown).

The functions performed by these modules will be described in detail with respect to methods 500-900.

The data storage application 120 operates to receive and process requests to persistently store and to retrieve data that is relevant to the operations performed and/or services provided by the server environment 110. Such requests may be received from the server application 114, other server environment applications, and/or (in some instances) directly from client applications such as 132.

The data storage application 120 may, for example, be a relational database management application or an alternative application for storing and retrieving data from data storage 122. Data storage 122 may be any appropriate data storage device (or set of devices), for example one or more non transitory computer readable storage devices such as hard disks, solid state drives, tape drives, or alternative computer readable storage devices. Furthermore, while a single instance of data storage 122 is shown in Fig. 1, the server environment 110 may include multiple instances of data storage.

The data storage 122 stores data relevant to the operations performed/services provided by the server environment 110, which may include, for example, user account data, and user document and design data (e.g. document and deck records defining documents and designs that have been created by users). In case users are associated with business accounts, the data storage 122 may also store business data such as design preference data, including, e.g., preferred format (such as fonts, font sizes, font colour, design colour themes, etc.), and preferred design tone (e.g., edgy, professional, personal, etc.). In addition, it may store a media library 124 (e.g. that stores data in respect of stock media such as pictures and videos that users may add to designs), design templates 126 (e.g. design records with placeholder and/or predefined design element attributes that can be used to create designs), and target design plans 128.

In server environment 110, server application 114 persistently stores data to data storage device 122 via the data storage application 120. In alternative implementations, however, the server application 114 may be configured to directly interact with data storage devices such as 122 to store and retrieve data (in which case a separate data storage application may not be needed). Furthermore, while a single data storage application 120 is described, server environment 110 may include multiple data storage applications. For example, one data storage application 120 may be used for user account data, another for user document and design data, another for design template data and so forth. In this case, each data storage application may interface with one or more shared data storage devices and/or one or more dedicated data storage devices, and each data storage application may receive/respond to requests from various server-side and/or client-side applications (including, for example server application 114).

As noted, the server environment 110 applications run on (or are executed by) computer processing hardware 112. Computer processing hardware 112 includes one or more computer processing systems. The precise number and nature of those systems will depend on the architecture of the server environment 110.

For example, in one implementation each server environment application may run on its own dedicated computer processing system. In another implementation, two or more server environment applications may run on a common/-shared computer processing system. In a further implementation, server environment 110 is a scalable environment in which application instances (and the computer processing hardware 112 - i.e. the specific computer processing systems required to run those instances) are commissioned and decommissioned according to demand - e.g. in a public or private cloud-type system. In this case, server environment 110 may simultaneously run multiple instances of each application (on one or multiple computer processing systems) as required by client demand. Where server environment 110 is a scalable system, it will include additional applications to those illustrated and described. As one example, the server environment 110 may include a load balancing application which operates to determine demand, direct client traffic to the appropriate server application instance 114 (where multiple server applications 114 have been commissioned), trigger the commissioning of additional server environment applications (and/or computer processing systems to run those applications) if required to meet the current demand, and/or trigger the decommissioning of server environment applications (and computer processing systems) if they are not functioning correctly and/or are not required for current demand.

Communication between the applications and computer processing systems of the server environment 110 may be by any appropriate means, for example direct communication or networked communication over one or more local area networks, wide area networks, and/or public networks (with a secure logical overlay, such as a VPN, if required).

Client system 130 hosts a client application 132 which, when executed by the client system 130, configures the client system 130 to provide client-side functionality/interact with server environment 110 (or, more specifically, the server application 114 and/or other applications provided by the server environment 110). Via the client application 132, and as discussed in detail below, a user can access the various techniques described herein. Client application 132 may also provide a user with access to additional design and document related operations, such as creating, editing, saving, publishing, sharing, and/or other design and document related operations. Such operations may be performed solely by client application 132, or may involve the client application 132 communicating with the server environment 110 for processing to be performed there (e.g. by the server application 114).

The client application 132 may be a general web browser application, which accesses the server application 114 via an appropriate uniform resource locator (URL) and communicates with the server application 114 via general world-wide-web protocols (e.g. http, https, ftp). Alternatively, the client application 132 may be a native application programmed to communicate with server application 114 using defined application programming interface (API) calls and responses.

A given client system such as 130 may have more than one client application 132 installed and executing thereon. For example, a client system 130 may have a (or multiple) general web browser application(s) and a native client application.

In the environment of Fig. 1, and the embodiments described below, various processing is described as being performed by different applications and modules thereof - e.g. the server application 114, the data storage application 120, and/or the client application 132. It will be appreciated, however, that in most cases the processing that is described could be performed by alternative applications or modules, and that such applications or modules may run either at a client system such as 130 or at a server environment such as 110. As one example, the techniques described herein may be provided as part of a stand-alone application in which case all processing and data storage may be performed by a single computer processing system (which is configured by one or more applications or modules).

As noted, the techniques and operations described herein are performed by one or more computer processing systems.

By way of example, client system 130 may be any computer processing system which is configured (or configurable) by hardware and/or software - e.g. client application 132 - to offer client-side functionality. A client system 130 may be a desktop computer, laptop computer, tablet computing device, mobile/smart phone, or other appropriate computer processing system.

Similarly, the applications of server environment 110 are also executed by one or more computer processing systems (e.g. processing hardware 112). Server environment computer processing systems will typically be server systems, though again may be any appropriate computer processing systems.

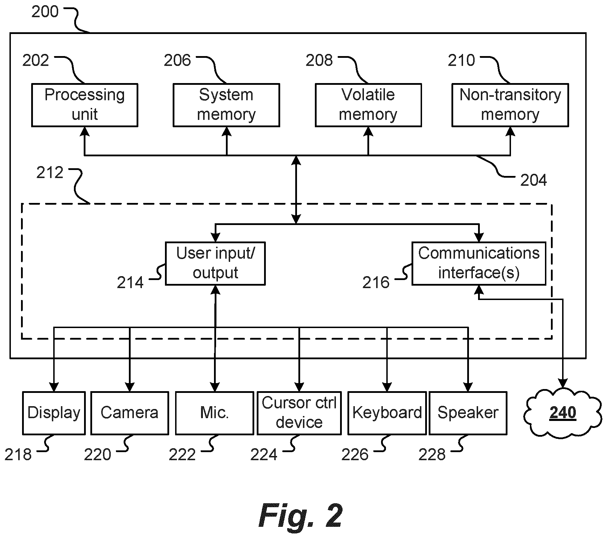

FIG. 2 provides a block diagram of a computer processing system 200 configurable to implement embodiments and/or features described herein. System 200 is a general-purpose computer processing system. It will be appreciated that FIG. 2 does not illustrate all functional or physical components of a computer processing system. For example, no power supply or power supply interface has been depicted, however system 200 will either carry a power supply or be configured for connection to a power supply (or both). It will also be appreciated that the particular type of computer processing system will determine the appropriate hardware and architecture, and alternative computer processing systems suitable for implementing features of the present disclosure may have additional, alternative, or fewer components than those depicted.

Computer processing system 200 includes at least one processing unit 202. The processing unit 202 may be a single computer processing device (e.g. a central processing unit, graphics processing unit, or other computational device), or may include a plurality of computer processing devices. In some instances, where a computer processing system 200 is described as performing an operation or function all processing required to perform that operation or function will be performed by processing unit 202. In other instances, processing required to perform that operation or function may also be performed by remote processing devices accessible to and usable (either in a shared or dedicated manner) by system 200.

Through a communications bus 204 the processing unit 202 is in data communication with one or more machine-readable storage (memory) devices, which store computer readable instructions and/or data, which are executed by the processing unit 202 to control operation of the processing system 200. In this example system 200 includes a system memory 206 (e.g. a BIOS), volatile memory 208 (e.g. random access memory such as one or more DRAM modules), and non-transitory memory 208 (e.g. one or more hard disk or solid state drives).

System 200 also includes one or more interfaces, indicated generally by 212, via which system 200 interfaces with various devices and/or networks. Generally speaking, other devices may be integral with system 200, or may be separate. Where a device is separate from system 200, connection between the device and system 200 may be via wired or wireless hardware and communication protocols, and may be a direct or an indirect (e.g. networked) connection.

Generally speaking, and depending on the particular system in question, devices to which system 200 connects - whether by wired or wireless means - include one or more input devices to allow data to be input into/received by system 200 and one or more output device to allow data to be output by system 200. Example devices are described below, however it will be appreciated that not all computer-processing systems will include all mentioned devices, and that additional and alternative devices to those mentioned may well be used.

For example, system 200 may include or connect to one or more input devices by which information/data is input into (received by) system 200. Such input devices may include keyboard, mouse, trackpad, microphone, accelerometer, proximity sensor, GPS, and/or other input devices. System 200 may also include or connect to one or more output devices controlled by system 200 to output information. Such output devices may include devices such as a display (e.g. a LCD, LED, touch screen, or other display device), speaker, vibration module, LEDs/other lights, and/or other output devices. System 200 may also include or connect to devices which may act as both input and output devices, for example memory devices (hard drives, solid state drives, disk drives, and/or other memory devices) which system 200 can read data from and/or write data to, and touch screen displays which can both display (output) data and receive touch signals (input).

By way of example, where system 200 is a client system such as 130 it may include a display 218 (which may be a touch screen display), a camera device 220, a microphone device 222 (which may be integrated with the camera device), a cursor control device 224 (e.g. a mouse, trackpad, or other cursor control device), a keyboard 226, and a speaker device 228.

System 200 also includes one or more communications interfaces 216 for communication with a network, such as network 140 of environment 100 (and/or a local network within the server environment 110). Via the communications interface(s) 216, system 200 can communicate data to and receive data from networked systems and/or devices.

System 200 may be any suitable computer processing system, for example, a server computer system, a desktop computer, a laptop computer, a netbook computer, a tablet computing device, a mobile/smart phone, a personal digital assistant, or an alternative computer processing system.

System 200 stores or has access to computer applications (also referred to as software or programs) - i.e. computer readable instructions and data which, when executed by the processing unit 202, configure system 200 to receive, process, and output data. Instructions and data can be stored on non-transitory machine-readable media such as 208 accessible to system 200. Instructions and data may be transmitted to/received by system 200 via a data signal in a transmission channel enabled (for example) by a wired or wireless network connection over an interface such as communications interface 216.

Typically, one application accessible to system 200 will be an operating system application. In addition, system 200 will store or have access to applications which, when executed by the processing unit 202, configure system 200 to perform various computer-implemented processing operations described herein. For example, and referring to the networked environment of FIG. 1 above, server environment 110 includes one or more systems which run a server application 114, and a data storage application 120. Similarly, client system 130 runs a client application 132.

**Example design user interfaces**

In the present disclosure, client application 132 configures the client system 130 to provide one or more user interfaces (UI). The UI allows a user to create, edit, and output designs. The UI also allows a user to access and cause other functionality described herein to be performed.

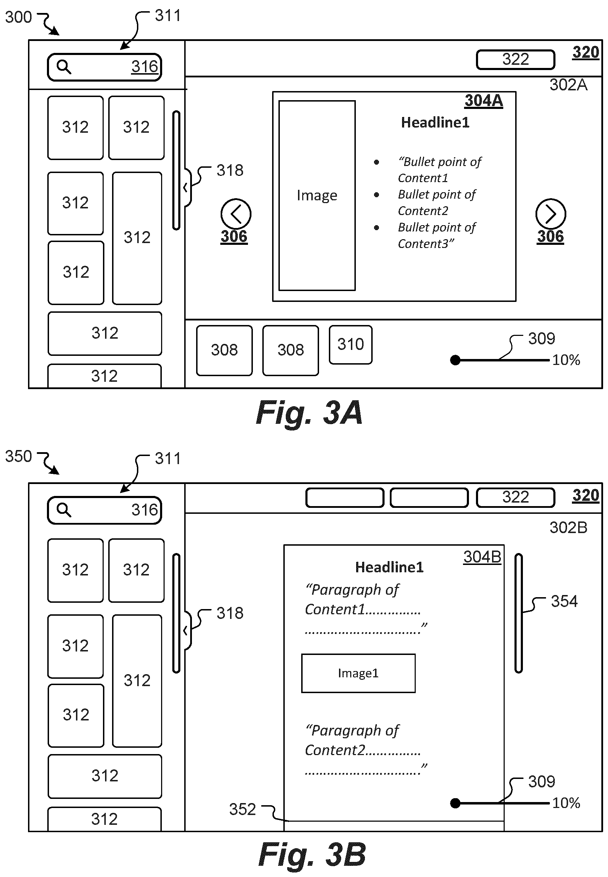

To illustrate the types of features that client application 132 may provide, FIGs. 3A and 3B provide two example user interfaces: UI 300 and UI 350, respectively. UI 300 and 350 are similar, however UI 300 provides an example UI for creating/viewing a deck-format design while UI 350 provides an example UI for creating/viewing a document-format design.

UI 300 includes a preview area 302A which is used to display a page 304A of a design being edited/viewed. In this example, UI 300 further includes: next and previous page controls 306 (which, where next/previous pages exist, can be used to display a next or previous page); page previews 308 (which, where multiple pages exist, provide previews of those pages); an add page control 310 (which can be activated by a user to cause a new page to be added to the deck).

UI 350 includes a preview area 302B which is used to display a document 304B (or part thereof). In this example, a horizontal line 352 is displayed on the preview 304B to indicate a page break and a scroll control 354 is provided to allow a user to scroll through the document.

UI 300 and UI 350 of the present examples both include a zoom control 309 which a user can interact with to zoom into/out of the currently displayed page 304A or document 304B.

UI 300 and UI 350 of the present examples also include an asset preview area 311. Asset preview area 311 displays previews 312 of assets that are available to users to assist in creating a design. Asset preview area 311 also includes a search control 316 via which a user can submit search data (e.g. a string of characters) to search for particular assets. Previews 312 of the search results returned are then displayed in the asset preview area 311. In this example, a hide preview area control 318 is provided which can be activated to hide the asset preview area 311 (serving to enlarge the design preview area 302).

Depending on implementation, the previews 312 displayed in asset preview area 311 (and the assets corresponding to those previews) may be accessed from various locations. For example, the search functionality invoked by search control 316 may cause client application 132 to search for assets that are stored in locally accessible memory of the system 130 on which client application 132 executes (e.g. non-transitory memory such as 208 or other locally accessible memory), assets that are stored at a remote server (and accessed via a server application running thereon), and/or assets stored on other locally or remotely accessible devices.

Different types of assets may be made available, for example media items, design templates, design styles (e.g. defined sets of colours, font types, and/or other assets/asset parameters), and/or other assets that a user may use when creating a design or document. For example, a preview 312 may be of a media item (e.g. a raster graphic, a vector graphic, a video, or an alternative element) and a user may add that media item to the design being edited by dragging and dropping the preview 312 onto the deck page 304A or document 304B.

Where a user adds content to a deck page 304A by dragging an asset preview 312 and dropping it on the page, application 132 will create a new element for the content (e.g. a shape type element) and add that element to the relevant page array (e.g. by appending it to the array). In this case application 132 may determine the position of the design element based on the actual drop point and generate position data to capture this (e.g. an (x,y) coordinate pair corresponding to - or based on - the drop point).

Where a user adds content to a document 304B by dragging an asset preview 312 and dropping it on the document 304B, application 132 will create a new item for the content and add that item to the document's content array. In certain implementations, application 132 will be configured to automatically add the dropped item at the location of the cursor 356. For example, if the cursor was positioned at the end of the existing document content (as depicted in UI 350), application 132 would add the new item to the end of the document's content array. Alternatively, if the cursor was positioned in the middle of the document in UI 350, application 132 may be configured to insert the new item into the document's content array in the middle of the document, which may cause any existing text in that location to move - e.g. across and/or down the page.

Content may be added to a design in other ways.

GUI 300 also includes an additional control area 320, which is used to display additional controls. The additional controls 320 may include permanent controls (e.g. controls such as save, download, print, share, publish, and/or other controls that are frequently used/widely applicable and that client application 132 is configured to permanently display); user configurable controls (which a user can select to add to or remove from area 320); and/or adaptive controls (which may automatically change depending, for example, on the type of content that is currently selected/being interacted with by a user). For example, if text content is currently selected, adaptive controls such as font style, type, size, position/justification, and/or other font related controls may be displayed. Alternatively, if vector graphic content is selected, adaptive controls such as fill attributes, line attributes, transparency, and/or other vector graphic related controls may be displayed.

Once a design has been created, application 104 may provide various options for outputting that design. For example, application 104 may provide a user with one or more options such as: saving the design to local memory of client system 130 (e.g. non-transitory memory 208); saving the design to data storage 122 of server environment 110; printing the design to a printer (local or networked); communicating the design to another user (e.g. by email, instant message, or other electronic communication channel); publishing the design to a social media platform or other service (e.g. by sending the design data to a third party server system using appropriate API commands to publish the design); and/or by other output means.

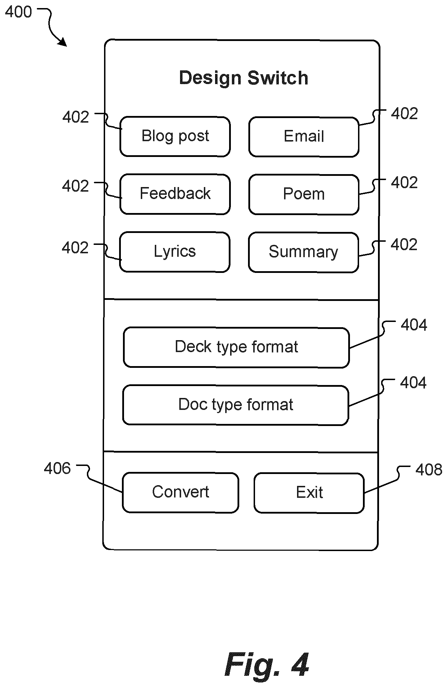

In the present example, UI 300 and UI 350 include a design switch control 322, the operation of which will be described further below. Selection of the design switch control 322 causes the client application 132 to display a design conversion UI, e.g., UI 400 depicted in Fig. 4. This conversion UI 400 may be displayed as a pop-up window over UI 300 or 350. Alternatively, the conversion UI 400 may replace the asset preview area 311 of UI 300/350, or replace the entire UI 300 or 350.

Conversion UI 400 includes one or more controls 402 to select a particular design category in which a user wishes to convert a source design. In some examples, the one or more controls 402 may vary depending on the type of the source design and/or target design. For example, if the source design is a deck-type design, such as a presentation deck, the conversion UI 400 may include controls associated with design categories that a presentation deck can be converted into, such as blog post, email, social media post, document, notes, etc. The conversion UI 400 in this example may not include controls associated with design categories a presentation design cannot be converted into, e.g., another presentation deck. Similarly, if the source design is a social media post, the conversion UI may include controls 402 for design categories into which a social media post can be converted. In other examples, if the target design format is a multi-page deck type of design (e.g., presentation slides), the conversion UI 400 may include controls associated with design categories that presentation slides can be represented as, such as a pitch deck, a lecture, etc.

In some embodiments, the conversion UI 400 includes one or more controls 404 to explicitly select a particular target design format - e.g., deck format or document format. In other embodiments, the conversion module 116 may automatically determine a target design format based at least on the selected design category. For example, if a selected design category is a social media post, the conversion module 116 may determine that the target design format is a deck-type format. Similarly, if a selected design category is email, the conversion module 116 may determine that the target design format is a document-type format. In such embodiments, the conversion UI 400 need not include one or more controls 404 to explicitly select a particular target design format.

In the example conversion UI displayed in Fig. 4, the controls 402, 404 are in the form of selectable affordances, each displaying the name of the corresponding design format. In other examples, the controls 402 and/or 404 may be in other forms, such as a drop-down menu, check buttons, search bar (where a user can enter a design category and/or design format), etc., without departing from the scope of the present disclosure.

The UI 400 may also include mechanisms to select a source design (e.g., to allow a user to select a design other than the design currently displayed in UI 300 or 350), and select one or more pages of a source design (e.g., to allow a user to select a range of design pages from a multi-page design to convert). These mechanisms are not displayed in the example conversion UI 400. However, a person skilled in the art would appreciate that conversion UI 400 can be adapted to include these selection mechanisms. For example, the mechanism to select a source design can be provided by a 'browse' control that allows a user to browse a collection of designs (stored on the client system 130 or server environment 110) and select a design from the collection. Similarly, the mechanism for selecting one or more pages of a source multi-page design can be provided by a drop-down menu or a range selection control that allows a user to select one or more pages of a selected multi-page design. It will be appreciated that the control to select a multi-page design may only be shown in case a multi-page design is selected as a source design in some embodiments.

Furthermore, in some embodiments, the UI 400 may provide one or more controls to provide users more options for the target design. For example, the UI 400 may include controls (not shown) that allow a user to select a language for the target design. Similarly, the UI 400 may include controls (not shown) that allow a user to select whether any non-text design elements (such as fill, charts, tables, etc.) should be retained in the target design or not. In still other examples, the UI 400 may include controls (not shown) for selecting the device-specific format for an output design - e.g., mobile format, PC format, etc.

The conversion UI 400 may also display a control 406 that can be selected by the user after making one or more selections in UI 400 to trigger the conversion process 500 and a control 408 for exiting UI 400 and in effect abandoning the conversion process.

It will be appreciated that UI 300, UI 350, and UI 400 are provided by way of example only. Alternative user interfaces, with alternative layouts and/or that provide alternative tools and functions, are possible. Furthermore, while different example user interfaces have been depicted and shown for viewing/editing a deck or a document, this need not be the case and the same user interface may be used.

*Example methods*

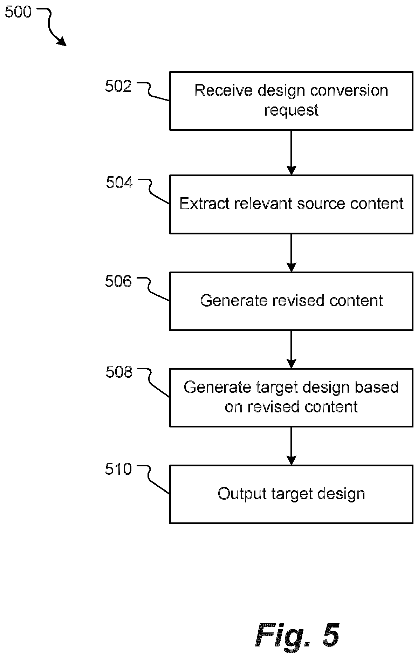

Referring to FIG. 5, a method 500 for converting a source design in a first design category to a target design in a second design category will be described.

In the present example, method 500 is described as being performed by the server application 114 and the client application 132. The processing described may, however, be performed by one or more alternative applications or modules.

The method 500 commences at step 502 where the conversion module 116 receives a design conversion request. The design conversion request may be generated by a client application 132 in response to a trigger action. For example, a user may be viewing/editing a single page design in a UI similar to UI 300 or 350 on the user's client system 130 and may select the design switch control 322. Selection of the design switch control 322 may reveal the conversion UI 400. From the conversion UI, the user may select a particular design category and/or design format in which the user wishes to convert the source design the user was viewing in UI 300 or 350.

In another embodiment, the design switch control 322 may be available on the homepage of a digital design application. A user may select the design switch control 322 from this interface, which results in the conversion UI 400 being displayed. In this example, as the user is not viewing a particular design before selecting the design switch control 322, the conversion UI 400 may include controls for selecting a source design, and/or selecting one or more pages of the source design. From the conversion UI 400, the user may select the source design, one or more pages of the source design to convert, a target design category (e.g., by interacting with control 402), and/or a target design format (e.g., by interacting with control 404).

It will be appreciated that these are only two examples and that in actual implementation, many different example scenarios may be possible to trigger the design conversion process 500 and the user may select one or more other additional parameters such as device-specific output format, target design language, whether the user wishes to retain any non-text elements from the source design, a tone for the target design, etc., for the target design. In any case, once a user selects the control 406 to commence the conversion process, the client application 132 generates a design conversion request.

The design conversion request includes a source design identifier, and a target design category. In embodiments where a source design selection control is not provided in UI 400 or a user does not select a source design using a provided control, an identifier of the design being viewed or edited by the user in UI 300 or 350 is selected by default as a source design identifier.

In some embodiments, where the source design is a multipage design and the user has selected a particular set of pages from the multi-page design to convert, the design conversion request also includes identifiers of the selected source design pages. Alternatively, if the page selection control is not provided or a user does not select one or more pages using a provided control, identifiers of all the pages of a multi-page source design are selected by default and added to the design conversion request. Furthermore, if available in the UI 400 and selected, the design conversion request may also include other target design parameters such as, e.g., a target design type (e.g., deck or document), a language for the target design, information indicating whether any non-text design elements of the source design are to be retained in the target design, a tone for the target design, whether any source formatting is to be retained in the target design, etc.

Once the design conversion request is generated, the client application 132 passes the design conversion request to the conversion module 116.

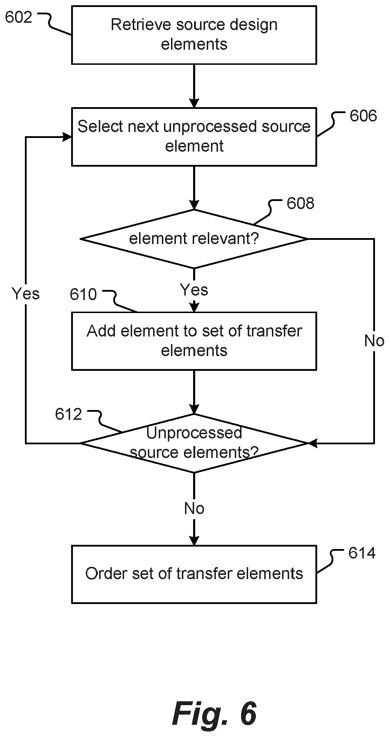

At step 502, the conversion module 116 receives the design conversion request and at step 504, the conversion module 116 extracts relevant content from the source design identified in the design conversion request. This process is described in detail with reference to Fig. 6.

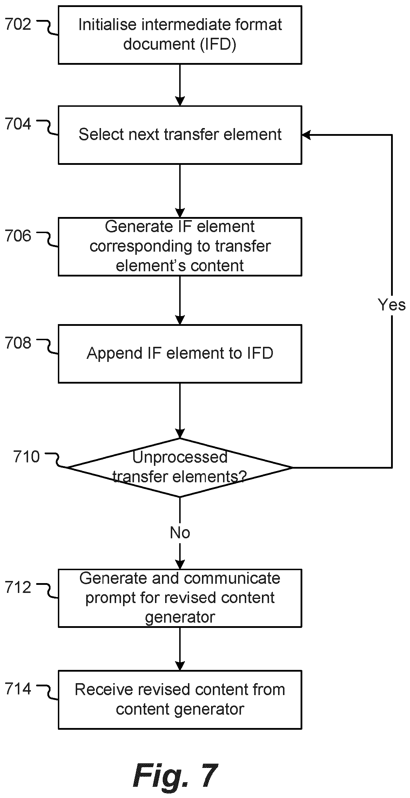

Once the source content is extracted, at step 506, the server application 114 generates revised content for the target design based at least on the extracted relevant content of the source design and the target design category. This step is described in detail with reference to Fig. 7.

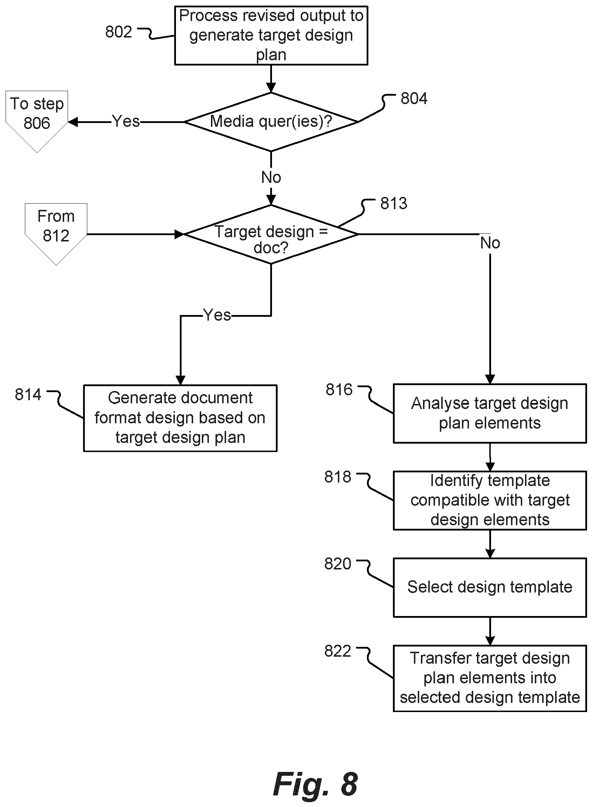

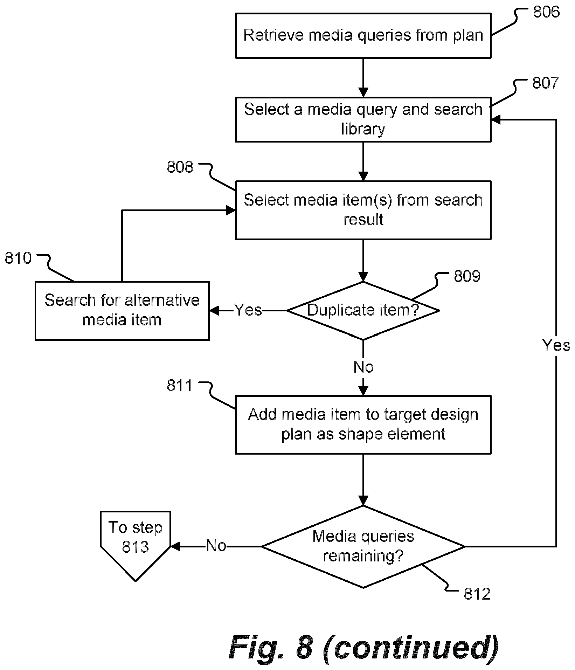

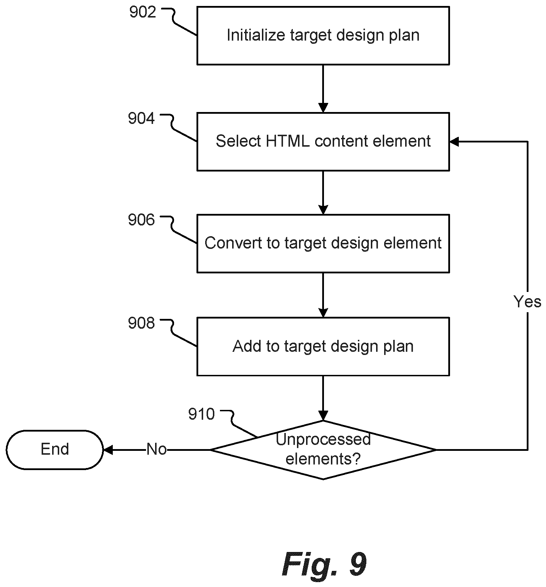

The method then proceeds to step 508, where the conversion module 116 generates the target design record based on the revised content and the target design type (i.e., document or deck format). This step is described in detail with reference to Figs. 8 and 9.

At step 510, the conversion module 116 communicates the target design to the client application and the client application renders the target design on a display of the user device (e.g., in UI 1000).

Fig. 6 illustrates an example method 600 for extracting content from a source design according to aspects of the present disclosure. The method 600 will be described with reference to an example where the source design has a deck format (and the design elements are associated with positional data). However, it will be appreciated that this is an example and that method 600 can be adapted to extract content from a document format source design.

The method commences at step 602, where the conversion module 116 retrieves the source design elements. To this end, it identifies the source design identifier from the design conversion request and uses this identifier to retrieve the source design record corresponding to that identifier from the data storage 122. In the present example, the conversion module 116 retrieves the deck record (and corresponding selected page records, if the source design includes multiple pages and if a selection of design pages is included in the design conversion request). From the deck and/or page records, the conversion module 116 retrieves the set of design elements included in the source design.

The conversion module 116 then identifies design elements that define content that may be relevant for the target design and adds each of the identified elements to a set of transfer elements. That is, for each source design element, the conversion module 116 determines whether the source design element should be provided as input to the content generator 118 (e.g., because it may affect the output of the content generator) or not. If the conversion module 116 determines that a particular source design element should be provided to the content generator for the target design, it adds the design element to a set of transfer elements. Otherwise, if the conversion module 116 determines that a particular source design element does not need to be transferred to the target design, it forgoes adding the corresponding design element to the set of transfer elements.

This process is described with reference to steps 606-612. At step 606, an unprocessed source design element is selected from the set of source design elements identified at step 602. The elements may be processed in any order (e.g., the order in which the elements appear in the source design's elements array), or in parallel. If the page has a background (and this is not defined as an element of the source design - e.g. it is defined as a design-level attribute), the conversion module 116 initially selects the background for processing. The background is otherwise treated as an element.

At step 608, a determination is made whether the content of the selected source design element would be relevant to the content generator 118 for generating revised elements for the target design. For example, extraneous elements or elements that are only present in the source design for decorative purposes may not affect the output of the content generator 118 and therefore may not be considered relevant to the target design. On the other hand, design elements that contribute to the overall idea or theme of the source design may affect the output of the content generator 118 and therefore may be considered relevant to the target design.

At step 608, the conversion module 116 may analyse the selected design element to determine whether a design element is extraneous or not. In some embodiments, the determination may be made based on one or more predefined rules.

For example, in some embodiments, the conversion module 116 may determine whether a design element is a purely decorative element or not. For example, a page background of a source design may be considered decorative. Similarly, a design may include other elements such as background images or fill that are purely decorative. The conversion module 116 may determine whether a design element is decorative in various ways. An example approach for doing so is described with reference to method 500 of Australian patent application 2023201537, titled "Systems and methods for identifying and/or transferring decorative design elements", filed on 13 March 2023, which is incorporated herein in its entirety.

If the conversion module 116 determines that the selected element is decorative, it may determine that the selected element should not be transferred.

In another example, if the selected element is a text element, the conversion module 116 may determine that the text element would be relevant for generating revised elements for the target design unless one or more of the following criteria are satisfied: the text of the element/item includes solely non-alphanumeric characters; the text of the selected element/item is a single character; and/or the text of the selected element/item is a two-digit numeral. If the conversion module 116 determines that the selected text element satisfies any of these criteria it may determine that it is not desirable to transfer the text element.

As another example, if the selected design element is a shape element, the conversion module 116 may be configured to determine that the element would be relevant for generating revised elements for the target design if the fill of the shape element is a media fill (e.g., a raster image or vector graphic rather than a colour or a colour gradient), a complete fill (with no transparencies), and either of the following is satisfied: its fill is detected to contain an object (e.g. by an object detection algorithm such as YOLOv3 model or an alternative model/process). If the selected shape element does not satisfy these criteria, e.g., because it is a colour fill, has transparencies, and/or does not contain an object, the conversion module 116 may be configured to determine that the shape element is not relevant for generating the revised elements. Otherwise, if the selected shape element satisfies any of these criteria, the conversion module 116 may determine that the selected shape element is relevant.

Further, if the selected design element is a chart or table element, the conversion module 116 may be configured to determine that the element is transferable.

As another example, conversion module 116 may be configured to determine that a fill defined by a shape element would be relevant for generating the revised content unless it (or the shape element) exceeds a defined aspect ratio. The defined aspect ratio may be set to try and capture fills that are relatively wide, which may indicate that the fill is being used as a separator. For example, if conversion module 116 determines that a fill has an aspect ratio of greater than 10 (i.e. > 10:1) it may determine that the fill is not to be transferred and discard that element.

It will be appreciated that these are example conditions for determining whether an element would be relevant for generating the revised content and other criteria for determining this may be applied without departing from the scope of the present disclosure. For example, the conversion module 116 may determine whether a selected element would be relevant for generating the revised content or not based on heuristics, e.g., based on the type, size, formatting, or color of the design element.

In other embodiments, the conversion module 116 may also determine whether a selected element is transferable based on the target design category. For example, if the target design category is lyrics or poem, the conversion module 116 may determine that shape elements would not be relevant for generating the lyrics or poem. In another example, if the target design category is an email, the conversion module 116 may determine that only text, chart or table elements are relevant and all other shape elements would be irrelevant. It will be appreciated that any combination of the above conditions or other conditions can be adopted for making this decision without departing from the scope of the present disclosure.

At step 608, if the conversion module 116 determines that the selected element would be relevant for generating the revised content, the method proceeds to step 610 where the conversion module adds the selected element to a set of transfer elements. Alternatively, if the conversion module 116 determines that the selected design element would be irrelevant for generating the revised content, the selected element is discarded and the method proceeds to step 612, where the conversion module 116 determines whether any unprocessed source design elements remain.

If the conversion module 116 determines that one or more unprocessed source design elements exist, the method reverts to step 606 where the next unprocessed element is selected. Method steps 606-612 are repeated until the conversion module 116 determines at step 612 that no unprocessed source elements remain.

Thereafter, at step 614, the conversion module 116 orders the set of transfer elements. In one example, the conversion module 116 generates an order attribute for each of the design elements added to the set of transfer elements.

The order attribute is generated to identify a position of the design element in the source design's viewing order. In the present context, the viewing order of a source design's elements indicates an order in which elements would be viewed by a viewer of the design. For example, an order consistent with written English language may be left-to-right, top-to-bottom. Accordingly, an order of '1' may indicate the element is likely to be the first element of the source design that would be viewed, and an order value of '5' may indicate the element is likely to be the 5th element viewed.

In certain embodiments, an element's order is associated with the element (e.g. stored as an attribute of the element). In such embodiments, the conversion module 116 orders the set of transfer elements based on an ascending order of the order attribute associated with each of the transfer elements.

In other embodiments, the conversion module 116 may be configured to analyse (or to cause another application to analyse) the source design to determine the viewing order of its elements. Such analysis may be performed in accordance with any appropriate method or algorithm. For example, conversion module 116 (or an alternative application) may determine the viewing order in accordance with: an approach such as that described in Australian patent application 2022271398, filed on 15 November 2022, titled "Systems and methods for generating webpage data for rendering a design" (or a similar approach); the approach described in the paper "Optimized XY-Cut for Determining a Page Reading Order" by Jean-Luc Meunier, Xerox Research Centre Europe, 6, chemin de Maupertuis F-38240 Meylan (January 2005) (or a similar approach); or an alternative approach.

It will be appreciated that in some embodiments, the conversion module 116 may analyse the source design to determine its viewing order before step 604 (e.g., between steps 602 and 604). In this case, unprocessed elements are selected at step 604 based on the identified viewing order and elements are added to the set of transfer elements also based on their viewing order. Therefore, in such cases step 614 may not be required at the end of method 600.

Furthermore, it will be appreciated that in alternative embodiments, the conversion module 116 may not perform the check at step 608. In such embodiments, all design elements may be considered relevant and all the design elements from the source design may be added to the set of transfer elements and ordered.

In some embodiments, the conversion module 116 may be configured to perform an additional culling step once the set of ordered transfer elements is obtained. For example, it may delete non-text transfer elements that are not surrounded by text elements. This may be done based on the presumption that images or charts that are not near text elements may be extraneous to designs. Specifically, the conversion module 116 may delete any non-text transfer elements from the ordered set of transfer elements that are not immediately preceded or followed by text elements. For instance, if the set of ordered transfer elements includes the following: text element1, shape element2, text elements, shape element4, shape elements, the conversion module 116 may be configured to delete shape element 5 as it is not preceded or followed by text.

In still further embodiments, method 600 may include an additional decision step between steps 602 and 604 to determine whether any design elements in the source design should be grouped. For example, a source design may include a diagram that is formed using multiple vector graphics such as circles, rectangles, lines, arrows, etc. In this example, each vector graphic may be associated with its individual shape element. However, each vector graphic by itself may be meaningless and irrelevant to the content generator 118 for generating revised content, but the entire diagram may be relevant and may also be included in the target design. To account for such cases, the conversion module 116 may determine whether any design element records need to be combined into a single group design element before step 604.

It may perform this determination using many different techniques. In one technique, it may utilize one or more conditions to check whether shape elements can be grouped. For example, it may determine the proximity of shape elements and whether any intervening text elements are present between two or more shape elements. If two or more shape elements are determined to be in close proximity (e.g., within a threshold distance) to each other without any intervening text elements, the conversion module 116 may determine that the two or more shape elements should be grouped. In addition or alternatively, it may determine to group shape elements based on the content or fill type of the shape elements. For example, if there are multiple shape elements with vector graphic fills in close proximity to each other, the conversion module 116 may determine that the shape elements should be grouped. However, if there are multiple shape elements with image fills in proximity to each other, the conversion module may determine that the shape elements should not be grouped. These are just a few techniques, and it will be appreciated that other techniques can be utilized to make this determination without departing from the scope of the present disclosure.

If the conversion module 116 determines that two or more shape elements should be combined, it may create a temporary group element that includes references to the two or more shape element records that form part of it. This temporary group element is then added to the set of transfer elements if it is considered relevant at step 604.

Fig. 7 illustrates an example method for generating revised content for the target design. Generally speaking, this method involves communicating the set of transfer elements to the content generator 118 along with one or more parameters such as the target design category and/or the source design category. The content generator 118 analyses the set of transfer elements and generates revised design elements (also referred to as revised elements herein) based on the one or more parameters. For example, if the source design is a webpage and the target design category is a summary, the content generator 118 may analyse the content of the webpage and generate a summary of one or more paragraphs that summarizes the webpage. In another example, if the source design is a presentation deck and the target design category is a blog post, the content generator 118 may analyse the content of the presentation deck and generate a blog post of several paragraphs based on the content of the presentation deck.

In one example, the content generator 118 may be a machine learning (ML) system that is configured to analyze the set of transfer elements and convert them into revised content based on the target design category. To this end, the ML model may be trained to identify natural language, prose, intent, and context of words to generate revised content. The ML model may also be trained to determine whether non-text content (e.g., images, videos, audio, charts, etc.) may be required for the target design and add such non-text elements to the revised content.

In one example, a specific ML model may be utilized that is specifically trained to perform the task of analyzing a set of transfer elements and generating revised content based on a target design category. In this case, an ML model may be fed copious amounts of training data initially to train it - e.g., it may be provided a large number of sets of transfer elements associated with different target design categories and their corresponding expected revised content (e.g., hundreds of thousands of input/output labelled training data samples). The ML model may be trained on this data until it can accurately generate the expected revised content for a given set of transfer elements and target design category most of the time. Then, at execution time, a set of transfer elements and target design category may be provided to the trained ML model and it outputs the revised content.

In other cases, a pre-trained generalized language ML model (that can perform any language based task) may be utilized. An example of such a generalized ML model is ChatGPT. The ML model in ChatGPT is trained on vast amounts of text data, such as books, articles, and other written works. This data is used to teach the model how to recognize patterns and relationships between words and phrases, and how to generate new text that sounds natural. Once the model has been trained on this data, it can be used to generate new text in response to any user input. As a generalized ML model of this type may not know the specific task of converting a set of transfer elements into revised content based on a target design category, a small amount of training data (e.g., 10-20 samples of sets of transfer elements and target design categories and corresponding revised content) may be provided to the ML model in order to teach the ML model to output the expected revised content for the given target design category.

In the case of the pre-trained generalized ML model, in some embodiments, the training data may be stored in the data storage 122 and may be provided to the model each time method 700 is executed - i.e., with each new request. In other embodiments, the training data may be provided once per session with the ML model. The training data is not required with each new request in this embodiment as long as an active session is maintained with the ML model. Once the session ends, the training data may be provided to the machine learning model again when a new session is initiated.

In some embodiments, the ML model may not be able to understand the set of transfer elements as it may only be able to accept inputs of certain types - e.g., plain-text, HTML, markdown language, etc.). In such cases, the set of transfer elements are first converted into an intermediate format (IF) that can be understood by the ML model. It will be appreciated that if the ML model is specifically trained for this task, it may be trained based on the original format of the set of transfer elements and in such cases there may be no need to convert the set of transfer elements into the IF.

Fig. 7 illustrates an example method for generating revised content. In this example method, it is assumed that the content generator 118 cannot understand the set of transfer elements in their original format and therefore they are converted into an IF first. As described above, this may not be required in all implementations and in such cases method steps 702-710 may be omitted.

The method 700 commences at step 702 where an IF document (IFD) or section is initialized. In the present example, the intermediate format is HTML. However, it will be appreciated that in other examples, the intermediate format may be any other format (e.g., markdown) that is readily understood by the content generator 118.

At step 704, an unprocessed transfer element is selected from the ordered set of transfer elements generated at step 614. The transfer elements may be processed in any order (e.g., based on their order attribute), or in parallel.

At step 706, an IF element corresponding to the selected transfer element's content is generated. The IF element may be generated in various ways.

In one example, if the selected transfer element is a text-type element, the intermediate format element includes the actual text associated with the transfer element and a hierarchy level of the text. For example, if the text-type element is associated with a hierarchy level 1 (indicating it is a title), the conversion module 116 may generate an IF element having the following HTML format

*<h1>[text associated with the transfer element]</h1>*

Where h1 is an HTML heading tag. Generally speaking, HTML provides six different heading tags - h1-h6, where h1 is a higher-level heading than h2 and so on. If a transfer element is a text-type of element having a hierarchy level between 1 and 6, it can be converted into the corresponding HTML heading tag h1-h6. However, if the transfer element has a hierarchy level lower than 6, e.g., hierarchy level 7 or 8, the conversion module 116 may either assign the lowest heading tag to it or assign a paragraph tag <p> to it. For example, the conversion module 116 may generate an IF element for the transfer element having one of the following HTML formats -

*<h6>[text associated with the transfer element]</h6>*

*<p> [text associated with transfer element]</p>*

In some examples, the conversion module 116 may not use all the HTML categories. Instead, it may apply its own rules for converting text-type elements into the HTML format. For example, the conversion module 116 may only convert text-type transfer elements with hierarchy levels 1-3 into HTML heading categories 1-3. Text-type transfer elements having any other hierarchy levels may be converted into HTML with the paragraph tag <p>.

In case the selected transfer element is for a fill (e.g., an image, a vector graphic, a video, etc.) as defined by a shape type element, the conversion module 116 generates an IF element that includes an HTML tag (based on the fill type), a path (or source) to the fill, and alternate text for the fill.

The HTML tag varies depending on the type of fill. If the fill is an image, the tag is <img>. Alternatively, if the fill is a video, the tag is <video>. To generate the path, the conversion module 116 generates a locally unique identifier for the fill. In some examples, this unique identifier may be the viewing order associated with the transfer element, the identifier of the shape element record, or any other alternative identifier). In one example, if the selected transfer element is a shape type element for an image fill, the conversion module 116 may generate a unique identifier such as "img1.jpg" or "img?id=1). The number 1 can reference the view order of the transfer element. In the present disclosure, the unique identifier can be used once revised content is received from the content generator to reinsert the fill in the revised content (if possible).

The alternate text for the fill can describe the fill and is usually utilized if the fill cannot be displayed for some reason. However, in the present disclosure, the alternate text can be used by the LLM to understand what the fill represents. The fill description may be determined in various ways.

In some embodiments, the conversion module 116 may utilize metadata (if available) associated with the shape element to generate the alternate text. For example, in some cases, the shape element record may include metadata that indicates the type of fill (image, video, vector graphic, etc.) and/or a description of the fill (e.g., image of dog with balloon, video of bubbles, etc.). If this metadata is present, the conversion module 116 may utilize this metadata to generate the alternate text.

Alternatively, the conversion module 116 may retrieve the fill associated with the selected shape element (e.g., from data storage 122) and analyze the content of the fill to generate the alternate text. In one example, the conversion module 116 may utilize a machine learning model to analyze the fill and generate the description. The type of machine learning model utilized may depend on the type of fill. For image type fills, a machine learning image-to-text converter may be utilized that transforms images into a short natural language description of the image. Image embedders of pre-trained neural networks such as BLIP-2, CLIP, or RED-Net may be utilized to obtain the image descriptions.

Similarly, for video type fills, a video classification machine learning model may be utilized that performs the task of identifying what a video represents. The media analyzer may convert the video into a series of frames or images and feed these to the video classification model. The video classification model may be configured to analyze each image or frame in the video to determine the content of the image/frame and also analyze the spatio-temporal relationship between adjacent frames to recognize the actions in a video (e.g., rising sun, setting sun, person doing push-ups, etc.). In one example, the video classification model may also generate a description for the video that represents the actions being performed in the video.

In any case, the machine learning model that is utilized to analyze the fill and generate the description must be trained such that it can determine what the fill represents with sufficient accuracy. For instance, the image encoder machine learning model may be trained by feeding an appropriate amount (hundreds of thousands if not millions) of labelled images. The machine learning model is then trained to estimate the description of an image based on the content of the image. During the training process, an image is fed to the model and based on the weights of the various layers of the model, a description is generated. If the output is incorrect (i.e., it does not match the label of the image), the model changes the weights of one or more of its layers to be more likely to produce the correct output. This process is repeated numerous times with multiple images, until the model can correctly determine the description of an image most of the time. It will be appreciated that the more the process is repeated, the more accurate the model becomes.

The video classification model can be similarly trained by providing it copious amounts of labeled video. Training of machine learning models is fairly well known in the art and is not described in more detail here.

In yet other embodiments, the conversion module determines the description for the fill based on the extension of the fill. For example, if the extension of the fill is .jpg, the conversion module may assign the alternate text IMAGE to the fill. Similarly, if the extension of the fill is .png, the conversion module may assign the alternate text VECTOR GRAPHIC to the fill and so on.

In one example, an IF element for a fill transfer element may be as follows -

*<img src = "imgl.jpg" alt = "Girl in a Jacket"*

In some embodiments, if the selected transfer element is a chart or table element, the conversion module 116 converts it into HTML in a similar manner - that is, it generates alternate text and a locally unique identifier when converting to the IF. Further, because HTML does not include a corresponding HTML tag for charts, the same HTML tag that is used for images may be used for charts. However, as the same HTML tag can be used for different types of elements, the identifier includes characters that help distinguish images from charts. For example, the identifier for images may include the characters "img" and the identifier for charts may include the characters "chart". It will be appreciated that these are merely examples and that any other identification mechanism may be employed to distinguish between the various types of design elements.

The alternate text and locally unique identifier may be generated using a similar process to that utilized for shape-type transfer elements. For example, if the transfer element is a chart, the conversion module 116 generates the alternate text based on either metadata associated with the chart element, based on utilization of a machine learning model that is trained to analyse the chart and generate a description based on the analysed chart (e.g., a chart showing the increasing trend of social media influence in the last five years), or based on the extension of the chart element.

In one example, an IF element for a chart transfer element may be as follows -

*img src = "chart1.gif" alt = "a chart showing the increasing trend of social media influence in the last five years"*

Similarly, if the transfer element is a table, the conversion module 116 converts it into HTML by generating alternate text and a locally unique identifier. To generate the alternate text the conversion module 116 may utilize metadata associated with the table element, a trained machine learning model to analyze the table and generating a description based on the analysed table (e.g., a table indicating the types of attributes that might be included in a deck record), or based on the extension of the table element.

In alternative embodiments, instead of describing the table with alternate text, the conversion module 116 may generate an HTML table based on the content of the table element. In this case, the HTML <table> tag may be utilized.

It will be appreciated that if markdown is utilized as the intermediate format instead of HTML, the set of transfer design elements are converted into markdown elements. For example, a shape, chart or table design element may be converted into a markdown element that includes a link component (e.g., that indicates a locally unique identifier for the content of the shape, chart or table design element) and an alternative text component that describes the content of the shape, chart or table design element. For example, an IF element for a fill transfer element may be as follows -

*![Girl in a Jacket] (imgl.jpg)*

Where, the alternative text component - Girl in a Jacket is in square brackets in the beginning and the link component that includes the identifier img1.jpg follows the alternative text component.

Once the IF element is generated, the method proceeds to step 708 where the conversion module 116 appends the IF element to the initialized IFD.

At step 710, the conversion module 116 determines whether any unprocessed transfer elements remain.

If the conversion module 116 determines that one or more unprocessed transfer elements exist, the method reverts to step 704 where the next unprocessed transfer element is selected. Method steps 704-710 are repeated until the conversion module 116 determines at step 710 that no unprocessed transfer elements remain.

Once all transfer elements are processed, the method proceeds to step 712, where the conversion module 116 generates a revised content request for the content generator 118. When the content generator 118 is an LLM, the input is a prompt for that LLM. The content of the prompt depends on the type of LLM system being used. If the LLM is a general purpose LLM, the prompt includes the source data (i.e., the IFD or set of transfer elements) and configuration data. The IDF provides the content of the source design in a format understood by the LLM, and the configuration data provides instructions to the LLM to generate the revised content.

In case the LLM includes a specific model that has already been trained for the specific task of generating revised content, the prompt may only include the IFD (or set of transfer elements) and one or more design parameters (such as the target design category and the source design category).

The precise format of the configuration data depends on a variety of factors, including the type of LLM (e.g. configuration data for use with OpenAI's ChatGPT may differ from the configuration data required for Google's Bard), the training mechanism of the ML model, and the content of the IFD (and/or other available data).

In one example, the configuration data for the prompt may include a task description (e.g., to cue the ML system to generate a desired output in the context of a task), task parameters (e.g., output format, word limit, tone of the output, whether to include non-text elements or not, rules, etc.) and/or one or more few-shot training examples of input prompts and the revised content the ML system is expected to generate based on those input prompts. In addition, the configuration data may include the target design category and the source design category.

In some embodiments, the configuration data is different for different design categories. This is because different types of revised content (e.g., different formats, word limits, tone, etc.) may be desirable for different design categories. For example, for a summary design category it may be desirable to have a few short paragraphs and no non-text elements, but for a blog post it may be desirable to have a few punchy sentences and one or more non-text elements (e.g., images, charts, tables, etc.). Accordingly, different numbers of words, sentences, or paragraphs may be suitably specified for different design categories. Similarly, different output formats (e.g., bullet points, paragraphs, lists, and so on) may be specified for different design categories. Further, different rules with respect to non-text data (e.g., move, retain, delete non-text elements) may be specified for different design categories. In some examples, the configuration data may specify that the content generator can only use non-text elements from the non-text elements provided in the IDF and in other examples, the configuration data may specify that the content generator can suggest its own non-text elements. In such examples, the configuration data may specify the output format of the non-text elements suggested by the content generator.

Examples of different types of configuration data for different design categories are displayed in the table C-F below.

Table C - Example configuration data to generate a summary design

| Description of task: | *Generate a* <u>summary</u> *of the* <u>presentation</u> *provided in a prompt.* |
| --- | --- |
| Parameters: | *Be helpful and creative, and do not use offensive language.*<br>The user will provide you with a presentation represented as HTML.<br>Use simplified language based on the contents of the presentation.<br>Format the output using <u>HTML</u> and written in <u>English</u>.<br>Retain the location of any \<item> tags in the HTML output, or remove some that aren't relevant. |

Table D: Example configuration data to generate a presentation design

| Description of task: | *Generate a* <u>presentation</u> *of the* <u>HTML content</u> *provided in a prompt.* |
| --- | --- |
| Parameters: | *Be helpful and creative, and do not use offensive language Format the output using* <u>HTML</u> *and written in* <u>French</u>. |

(continued)

| | The output HTML should represent a paginated deck of slides, with h1 headings for each slide.<br><br>Slides may include diverse content such as body text, lists and images. |
| --- | --- |

Table E - Example configuration data to generate a blog post design

| Description of task: | *Generate a* blospost *of the* HTML content *provided in a prompt.* |
| --- | --- |
| Parameters: | *Be helpful and creative, and do not use offensive language The input text might be out of order. Your task is to reorder the text accordingly and generate a blog post with minimum 800 words based on the contents.*<br><br>*The output should be formatted using* HTML *and written in* {output language}.<br><br>*Any non-text elements may be retained if they are appropriate to the output.*<br><br>*Attributes of any non-text elements retained in the output should be unchanged.* |

Table F: Example configuration data to generate a song lyrics design

| Description of task: | *Generate* sons lyrics *of the* HTML content *provided in a prompt.* |
| --- | --- |
| Parameters: | *Be helpful and creative, and do not use offensive language Your task is to take this* HTML *content. choose a genre and generate a set of song lyrics based on the contents.*<br><br>*The output should be formatted using* html *using just a single heading and written in* {output language}.<br><br>*The song title should include the genre.*<br><br>*Either retain any non-text elements if they are appropriate to the output or generate a 3-4 word media query for more appropriate non-text elements for the output.* |

It will be appreciated that the configuration data may include many alternative components and that many alternative approaches to generating a prompt are possible. For example, the configuration data may be (or include) a single pre-assembled template prompt - e.g. a string that includes all the relevant set text components. Alternatively, separate prompts may be generated including separate components and combinations thereof. The LLM can thus be configured by providing the configuration data as a prompt, part of a prompt, or series of prompts to the LLM.

The configuration data may be stored in the data storage 122. At step 712, when generating the prompt, the conversion module 116 may determine the target design category from the conversion request and retrieve the appropriate configuration data based on the target design category. It may also determine whether the configuration data needs to be updated. For instance, it may include the source design category, the output language, and the output format in the configuration data at runtime - e.g., "the input data is from a presentation deck", "the output should be formatted in HTML ...and written in French" - to provide more context to the LLM.

The conversion module 116 then combines the configuration data with the IFD to generate the prompt. In one embodiment, the conversion module 116 generates the prompt by constructing a text string from one or more component parts of the configuration data and the IFD (e.g., by concatenating the component parts and IFD together). Once the prompt is generated, it is communicated to the content generator 118.

By way of the configuration data, the content generator 118 is cued to generate revised content based, in part, on the IDF. For example, based on the configuration data shown in the table above, the content generator 118 may be cued to generate 3-5 paragraphs summarizing the content of the IFD. When summarizing the IFD content, it may take into consideration the text associated with each transfer element in the IFD, the hierarchy level of the transfer element, and/or the type of transfer element. For example, if the IFD includes 16 transfer elements including 12 text-based transfer elements (e.g., two heading_1 elements, two heading_2 elements, eight body elements) and four shape transfer elements, the content generator 118 may be configured to analyse each of these text-based transfer elements and shape transfer elements to generate a single revised heading element, and 3-5 revised paragraph elements. As the configuration data dictates that non-text elements are to be discarded, the content generator 118 may not generate any revised non-text elements in this example.

In another example, when the target design category is a social media post, the content generator 118 may be cued to generate 1-2 punchy sentences and an image based on the content of the IFD. When analysing the IFD to generate this output, it may take into consideration the text associated with each transfer element in the IFD, the hierarchy level of the transfer element, the description of the non-text elements and the type of transfer elements.

When generating an output that includes non-text elements, the content generator 118 may select an image element from the IDF (if the configuration data encourages the content generator to do so, e.g.). To this end, the content generator 118 may be configured to analyse the descriptions of the image transfer elements in the IFD and select the image element from the IFD that best matches the revised text content generated by the content generator 118. An example HTML output from the content generator 118 at this step is shown in table G below. In this example, the source design was a presentation deck of six slides on the topic "Farm to Table" and the target design was a Blog Post in English.

Table G: Example revised content generated by the content generator

```
<div>
<h1>Farm to Table: The Evolution of Agriculture</h1>
<img src="cvid://item0" alt="image">
<p>The story of agriculture is a rich tapestry woven through the course of human history... This blog post will take
you through the fascinating journey of agriculture, from its humble beginnings to its modern-day manifestations.
</p>
<h2>The Origins of Agriculture</h2>
<img src="cvid://item1" alt="image">
<p>About 12,000 years ago, humans made the transition from hunter-gatherer societies to a more settled lifestyle.....</p>
<h2>From Inequality to the Industrial Revolution</h2>
<img src="cvid://item2" alt="image">
<p>Despite its positive contributions, early agriculture also brought about inequality... </p>
<h2>Green Revolution and Its Impact</h2>
<p>The next significant event in the history of farming was the Green Revolution of the 1960s and 1970s... </p>
<h2>Present Day Agriculture: Urban and Precision Farming</h2>
<img src="cvid://item3" alt="image">
<p>Today, two significant trends are shaping the future of agriculture - urban agriculture and precision farming...</p>
<p>To quote Brian Brett, "Farming is a profession of hope." From its inception to its present state, agriculture has
indeed been a beacon of hope, sustaining civilizations, driving progress, and feeding billions.....</p>
</div>
```

In other embodiments, when generating an output that includes non-text elements, the content generator 118 may not be able to select a media element from the IDF (e.g., because the IFD does not include any media elements, or none of the IFD media elements are suitable for the text content generated by the content generator 118, and/or the configuration data indicates that the content generator 118 can recommend its own image elements). In such cases, the content generator 118 may generate a media query that can be subsequently used by the conversion module 116 to perform a search in a media library for a media item that matches the media query. To guide the content generator to generate the media query, the configuration data may include instructions, such as *"if no images provided in IFD or no images provided in the IFD are appropriate, generate a media query having a format "findImage?q=the query phrase "*, *the query phrase should be a 3-4 word phrase describing the content of the desired image".*

Once the content generator 118 has generated the revised content, the content generator 118 communicates the output back to the conversion module 116 at step 714. In some embodiments, the output is in the intermediate format.

Fig. 8 illustrates an example method for generating the target design based on the revised content received from the content generator 118.

The method commences at step 802, where the conversion module 116 processes the output (also referred to as revised content herein) from the content generator 118 to generate a target design plan descriptor. In some embodiments, the conversion module 116 receives the output in the form of a string of IF text (e.g., HTML) and converts this back into design elements and adds these design elements to the target design plan descriptor. For example, the conversion module 116 may parse or process the HTML text and identify respective design elements (e.g., text-based elements, non-text based elements, and/or media queries). This process is described in further detail in Fig. 9.

In particular, Fig. 9 commences at step 902 where a target design plan descriptor is initialized. In particular, the conversion module 116 may generate a unique target design identifier and store the target design plan identifier in a target design plan descriptor along with the output received from the content generator 118. In addition, the conversion module 116 may include information from the design conversion request into the target design plan descriptor. For example, it may add the target design category and the target design type (if available) in the descriptor. An example target design plan descriptor at this stage is displayed in table H below -

Table H: example target design plan descriptor at step 902

| Target design plan identifier | 273278 |
|---|---|
| Target design category | Blog post |
| Target design type | Document |
| Revised content | \<HTML text string received from the content generator> |

At step 904, the conversion module selects an unprocessed revised content element from the revised content. To this end, the conversion module 116 parses the HTML output received from the content generator 118 and identifies individual revised content elements. It may do so using any suitable technique. In HTML each element includes a pair of tags (starting and ending tags) and the text of the graphical content inside the tags. Accordingly, in one technique, the conversion module 116 can parse the output and identify each HTML element based on the starting and ending tags as an individual revised content element. It can then select an unprocessed revised content element based on the order in which the revised content elements are identified in the output. For example, in the first instance of the method, the conversion module 116 retrieves the first revised content element in the output.

At step 906, the conversion module 116 converts the revised content element into a target design element. This may be done in various ways.

For example, it may convert any output elements that include a heading or paragraph tag (e.g., \<h1>...\</h1>, \<p>...\</p>) as a text element with a corresponding text hierarchy level. In doing so, the conversion module 116 may generate a text element record and store text data defining the text content (e.g., a set of one or more characters between the heading or paragraph tags), and text format data (if available) that defines how the text characters are to be displayed. Text format data may include data such as font type, font colour, font style, font size, and/or other format data.

In some embodiments, the conversion module 116 may apply predefined format data based on the HTML tag of the revised content element. For example, it may apply a particular predefined font size, font type, and/or font colour for an h1 level heading, and a different predefined font size, front type, and/or font colour for a h2 level heading, and so on.

In other embodiments, the conversion module 116 may match the format data of the target elements to the format data of the source elements. For example, if the source design had a hierarchy order 1, order 2 and order 3 text elements and the output includes hierarchy order 1 and order 3 elements, the conversion module 116 may utilize the same font type, font colour, font style, and font size to the hierarchy order 1 and order 3 elements as that applied in the source design. To do so, the conversion module 116 may have to perform a lookup in the source design record for text design elements and their format data and import this format data at step 906 when generating the target design element records.

In still other embodiments, the conversion module 116 may retrieve the design preference data associated with the user that generated the design switch request and apply the preferred format (such as font, font size, font colour, design colour theme, etc.) to the target element. For example if the target element is a heading and the preferred format for a heading is Arial, font size 24, in a bottle green colour, the conversion module 116 applies these format styles to the heading level target design.

In other examples, the revised content elements may include format data selected by the content generator 118. In such cases, the format data selected by the content generator may override any default or brand preference format and the conversion module 116 may store the format data associated with the selected revised content element in the design element record.

The conversion module 116 may also store a text hierarchy level (based on the HTML tag) and position data. In some embodiments, the conversion module 116 may determine the position data for a design element based on the order in which the design element appears in the HTML output. For example, if a text design element appears first in the HTML output, its position data may be 1 and if a text design element appears fifth in the HTML output, its position data may be 5, and so on.

If the selected revised content element includes an image, embed, or video tag (e.g., \<img src = "img1.jpg" alt = "Girl in jacket">, or \<embed src = "file1.mid"), the conversion module 118 may recognize this to be a shape element and may convert it into a shape element at step 906. In doing so, the conversion module 116 may identify the source fill (based on the path to the fill present in the HTML element), retrieve the fill data associated with the identified source design element (e.g., from data storage 122), and store the fill data in the target design element record. In addition, the conversion module 116 adds position data to the record (based on the order in which the shape element is presented in the HTML output).

If the selected revised content element includes a table tag (e.g., \<table>...\</table>), the conversion module 116 may recognize this to be a table element and may convert it into a table element at step 906. In doing so, the conversion module 116 may retrieve and store the table structure data which defines a structure of the table, the cell data defining the content of each table cell, and format data (if available) from the revised content element. In addition, the conversion module assigns position data to the target design element based on the order in which the table is present in the HTML output.

If the selected revised content element includes any text indicating that the revised content element is a media query (e.g., in case the content element includes any text, such as "findMedia?q", <media query>, etc.), it determines that the revised content element is a media query. In such cases, the conversion module 116 stores the search term or phrase from the revised content element as a media query in the target design plan descriptor.

It will be appreciated that different processing techniques may be used depending on the format of the output. Once the design element and/or media query is identified and added to the target design plan, the method proceeds to step 910, where the conversion module 116 determines whether any unprocessed revised content elements remain.

If the conversion module 116 determines that one or more unprocessed revised content elements exist, the method reverts to step 904 where the next unprocessed revised content element is selected. Method steps 904-910 are repeated until the conversion module 116 determines at step 910 that no unprocessed revised content elements remain. Thereafter the process 900 ends.

The table I below shows an example design plan descriptor at the end of process 900.

Table I: Example design plan descriptor at the end of method 900

| | |
|---|---|
| **Target design plan identifier** | 273278 |
| **Target design category** | Blog post |
| **Target design type** | Document |
| **Revised content** | <HTML text string received from the content generator> |
| **Text element1** | Text Content: sale of boots<br>Text format: Arial, 28pt, black<br>Text hierarchy level: 1<br>Order: 1 |
| **Text element2** | Text content: "Boots can be worn in any season....."<br>Text format: April, 14pt, black<br>Text hierarchy level: 4<br>Order: 2 |
| **Shape element 1** | Shape path: Img1.jpg<br>Shape format: 1010×640<br>Order: 3 |
| **Table element1** | Table format data:<br>Cell data:<br>Cell format data:<br>Order: 4 |
| **Media query** | "Girl with red boots"<br>Order: 5 |

Returning to method 800, at step 804, the conversion module 116 determines whether the target design plan includes any media queries. It may do so by inspecting the target design plan descriptor. If the conversion module 116 determines that the target design plan includes one or more media queries, the method proceeds to step 806, where the conversion module 116 retrieves the one or more media queries from the target design plan descriptor.

At 807, the conversion module 116 selects a first media query from the list of one or more media queries and uses this media query to search a media library (e.g. media library 124 stored in data storage 122) to identify a media item that matches the media query. In one example, the conversion module 116 may pass the media query to the data storage application 120, which performs a search in the media library 124 for one or more media items that match the media query. The data storage application 120 communicates the identified media items to the conversion module 116.

At 808, the conversion module 116 selects a media item from the results. In one example, the conversion module 116 may select the first media item in the list of media items (as it may likely have the highest match percentage to the media query). In other examples, the conversion module 116 may randomly select a media item from the list of media items (in case all the media items equally match the media query).

At 809, the conversion module 116 determines whether the selected media item has already been selected at step 808 for another media query associated with the design plan descriptor. For example, media items may each have a corresponding media item ID and when a media item is selected, the media item ID for the selected media item may be stored in the target design plan descriptor in association with the corresponding media query. At step 809, the conversion module 116 may compare the media item ID of the media item selected at step 808 with the media item IDs already stored in the target design plan descriptor to determine whether the currently selected media item has previously been selected for another media query in the target design plan.

If at step 809, the conversion module 116 determines that the selected media item is not a duplicate media item, as is necessarily the case for the first media item selected, at step 808 the media item is stored in the target design plan descriptor at step 811. In some embodiments, the media item may be added as a new shape element, replace the corresponding media query, and inherit the position order of that media query in the target design plan descriptor. In some embodiments, storing the media and/or media item identifier may further include retrieving and storing metadata of the media item, for example, the media item's resolution and/or aspect ratio in the target design plan descriptor.

The method then proceeds to step 812, where the conversion module 116 determines whether all media queries have been processed and corresponding media items selected and assigned to media queries. If it is determined that one or more media queries have not yet been processed (i.e., media items have not been selected for the one or media queries), the method 800 reverts to step 807 and steps 807-812 are repeated until all media queries have been processed.

Returning to step 809, if at this step the currently selected media item is determined to be a duplicate media item, for example, because it is determined that the selected media item has the same media item ID as another media item already stored in the deck plan descriptor, the method proceeds to step 810 where an alternative media item is searched for using the current media query. The method loops back to step 808 and retrieves an alternative media item from the results (e.g., the next media item in the list of media items or another randomly selected media item from the list of media items until a non-duplicate media item is selected for the media query.

The table below shows an example design plan descriptor after this step, where shape element 2 is added and the media query is removed.

Table J: Example design plan descriptor after step 810

| | |
|---|---|
| **Target design plan identifier** | 273278 |
| **Target design category** | Blog post |
| **Target design type** | Document |
| **Revised content** | <HTML text string received from the content generator> |
| **Text element1** | Text Content: sale of boots<br>Text format: Arial, 28pt, black<br>Text hierarchy level: 1<br>Order: 1 |
| **Text element2** | Text content: "Boots can be worn in any season....."<br>Text format: April, 14pt, black<br>Text hierarchy level: 4<br>Order: 2 |
| **Shape element 1** | Shape path: Img1.jpg<br>Shape format: 1010×640<br>Order: 3 |
| **Table element1** | Table format data:<br>Cell data:<br>Cell format data:<br>Order: 4 |
| **Shape element 2** | Shape path: Img51.jpg<br>Shape format: 1010×640<br>Aspect ratio: 2:1<br>Order: 5 |

It will be appreciated that checking for duplicate images is an optional step. In some cases, if using the same media items multiple times in a target design is permissible, method steps 809 and 810 may be omitted. Further, although method 800 describes that the media items are retrieved from a media library maintained by the server environment 110, this need not be the case in all implementations. In other examples, the conversion module 116 may perform a search for media items in external media stores (maintained by third parties or over the Internet).

Whilst steps 807-812 are illustrated as a loop of sequential decisions and steps, alternative implementations of retrieving media items are possible. For example, it is also possible to search a media library using all of the media queries and retrieving respective media items from the respective results before determining whether any duplicate media items were retrieved. That is, media item retrieval may be performed for all media queries in parallel or may be performed sequentially, with any duplicate media items between pages being discarded and alternate items retrieved.

At step 813, the conversion module 116 determines whether the target design is required in a document format or a deck format. In some embodiments, the target design plan descriptor includes the target design type information and the conversion module 116 may make this determination by examining this target design type information. In other embodiments, the target design plan descriptor may only include information about the target design category. In such cases, the conversion module 116 may maintain a lookup table that indicates the design format type for each permissible design category. At step 813, the conversion module 116 may inspect the lookup table with the design category received in the design conversion request to determine the corresponding target design type.

If the conversion module 116 determines that the target design type is document format, the method proceeds to step 814, where the conversion module 116 generates a document format design based on the target design plan descriptor. This involves e.g., creating a document record based on the target design plan descriptor. The document record includes an ordered sequence (such as an array or other ordered set) of the target design elements from the target design plan descriptor.

Alternatively, at step 813, if the conversion module 116 determines that the target design type is a deck format, the method proceeds to step 816, where the conversion module 116 analyses the target design plan descriptor to generate analysis data. For example the conversion module 116 may analyse the target design plan descriptor to determine the presence, type, length, size, quantity, and/or length of each design element (e.g. headline, text content, and/or shape elements). Analysis data may be hierarchical. For example, each element in the descriptor may be analysed to determine if it is a text element or a shape element. Text elements may be analysed as being, for example, one of a heading, a sub-heading, or body text. Body text elements may be analysed as being, for example, one of a sentence, a paragraph, or bullet points. Additionally the number of characters in a sentence, and the number of sentences in a paragraph and the number of bullet points in an element may be determined. Shape elements may be analysed as being, for example, one of an image, a shape, or a video. Media items may be analysed to determine their dimensions, aspect ratio, and/or resolution. The analysis data of all analysis objects may be aggregated to generate analysis data of the target design.

In some embodiments, the analysis data for a particular target design includes:

- A set of one or more analysis objects. Each analysis object is associated with an element of the design (headline, text content and/or shape element) and provides information concerning that element.

- A partition key that provides a first (and relatively general) measure of the types and amounts of content in the design.

- A vector that provides a second (and more specific) measure of the types and amounts of content in the design.

- Content metrics, which provide a third measure of the types and amounts of content in the design.

In some embodiments, the conversion module 116 may generate the analysis data for the deck according to method 500 described with reference to FIG. 5 of Australian provisional application number 2023210536, titled "Systems and methods for processing designs", filed on 31 July 2023, which is incorporated herein by reference.

The analysis data may then be used to match the target design plan to one or more deck-format design templates 126 stored in data storage 122 at step 818. Each of the design templates 126 may also have been analysed in a similar manner to determine analysis data for each of the design templates 126. The analysis data associated with design templates 126 may be stored along with the design templates 126 in the data storage 122.

At 818, the conversion module 116 compares the analysis data for the target design plan with the analysis data of design templates 126 to identify one or more design templates that may be compatible with the content of the target design plan. The comparison may include comparing the values of the analysis objects in the design templates with the values of the analysis objects in the target design plan. Design templates that have analysis object values that match the analysis object values of the target design plan are selected as compatible templates.

For example, for the target design plan example described above for a blog post, a compatible design template may be a design template that can accommodate a heading, body text, two media items, and a table. That is, each compatible design template 126 should include destination design elements configured to receive, position and display the design elements of the target design plan.

Once compatible design templates are identified, a design template is selected. If only one compatible design template is identified at step 818, that design template may be automatically selected at step 820. Alternatively, if a set of compatible design templates are identified, one design template may be selected from the set. The selection may be done based on one or more predefined criteria - e.g., the most compatible design template (if compatibility scores are computed and available) may be selected, or the first design template in the set may be selected.

In some embodiments, the user may select the design template. In such embodiments, if a set of compatible design templates are identified, the server application 111 may communicate the set of identified compatible design templates to the client application 142 for displaying on the client system for user selection.

At step 822, the design elements from the target design plan are transferred into the selected design template, that is, the design elements (i.e., text content, table, and/or media items) are transferred into corresponding destination elements of the selected design template. The design template may thus provide a structure for where elements such as text, tables, charts, and images may be positioned for display in the output deck. In addition to positioning elements for display, templates may also apply stylistic elements, for example, fonts and colours, either to individual elements and/or as a palette across the deck based on the formatting provided in the design plan or based on the formatting associated with the design template.

Thereafter method 800 ends.

Although method 800 describes selection of a single design template at step 820, this may not be the case in all implementations. In some embodiments, multiple compatible design templates may be selected and populated with the target design plan to present multiple candidate deck-format designs to the user for their preferred selection of the final design.

Further, once the final design is created, a target design record is generated for the deck and stored in the data storage 122. In some embodiments, the target design may be temporarily stored in a cache. If the user is not satisfied with the target design and starts process 500 again, the target design record may be deleted. Alternatively, if the user is satisfied with the target design and explicitly saves it, the server application 111 may store the data record in the data storage 122.

In the methods described above, if the target design is of a deck type, the target design template is selected once target elements are generated by the content generator. In other embodiments, the target design template may be selected before the target elements are generated by the content generator. In fact, the target design template may be selected before method 700. In such embodiments, the conversion module 116 selects one or more design templates based on the target design type (e.g., deck or doc) and target design category (e.g., pitch, presentation, knowledge sharing, etc.). Further, if the user is associated with any preferred design styles (e.g., punchy, profession, etc.), the conversion module 116 may filter design templates based on such preferred design styles.

In some embodiments, the conversion module 116 may perform a search in the 'design type' field in the design template records stored in the design templates library 126 using the target design category and/or in the style field of the template records using the style descriptor of any preferred design styles to identify one or more target design templates.

It will be appreciated that more than one design template may match the style descriptor and/or the design category type. In such cases, the conversion module 116 may be configured to select a predetermined number (e.g., 1, 2, 5, etc.) of design templates from the matching results.

The conversion module 116 may then generate analysis data based on the selected design templates. Generating analysis data includes retrieving (e.g. from the template library 126) additional metadata in respect of the selected design templates and analysing the respective metadata. For example, the conversion module 116 may analyse the template metadata to determine the presence and type of various placeholder elements, such as placeholder text elements and placeholder shape elements, included in each design template.

Analysis data may be hierarchical, that is, each of the elements of each of the templates may be considered an analysis object and analysed to determine analysis data of each element. For example, each element of a template may be analysed to determine if it is a text element or a shape element. Shape elements may be analysed to determine if they are configured to receive a media item, colour fill, or alternative fill type content. For example, media item elements may be analysed as being configured to receive an image and/or a video. Text elements may be analysed to determine a text hierarchy level, for example, level 0, level 1, level 2, or level 3, and/or as being one of a pre-heading, a heading, a sub-heading, or body text. The analysis data of all design elements of a template may be aggregated to generate analysis data of the respective template.

Analysis data may be determined by processing and identifying attributes explicitly defined in metadata of respective elements. For example, a placeholder shape element of a template may have an element record explicitly defining that its expected fill type is an image type fill. Accordingly, conversion module 116 may generate analysis data of such an element being an image-type placeholder element. Similarly, depending on the particular design template, a placeholder text element record may explicitly define a respective text hierarchy level. Alternatively, conversion module 116 analyses text elements of templates in order to determine text hierarchy levels. Such determinations may be based on one or more of, for example: a default font size defined in the element record for the text element; relative font size between font sizes defined for text elements in the template; a (x, y) position of the element, a relative (x, y) position of elements, particular terms in placeholder text of the element; and other factors. As one example, a text element with placeholder text of "Heading goes here" or "Put your main topic here" may be determined to be text element with a text hierarchy level of heading, and a text element with an x coordinate higher than the heading element may be determined to be a text element with a text hierarchy level of pre-heading. It will be appreciated that many alternative processes for determining analysis data are also possible.

Once the design templates are analysed, the conversion module may update the configuration data in the prompt based on the number and type of design elements in the selected one or more design templates. For example, if a selected design template has a heading, a sub-heading and a paragraph text element and two image elements, the conversion module 116 may update the configuration data to instruct the content generator 118 to generate a heading, subheading and 2-3 paragraph level text elements and retain or provide media queries for two images.

In this way, the design template may be selected first and its placeholder design elements may help guide the content generator 118 to generate revised design elements that fit the design template. Accordingly, in such cases, steps 816-820 are not performed. Instead, the target design elements are directly transferred to corresponding placeholder elements in the selected design template (that is, step 822).

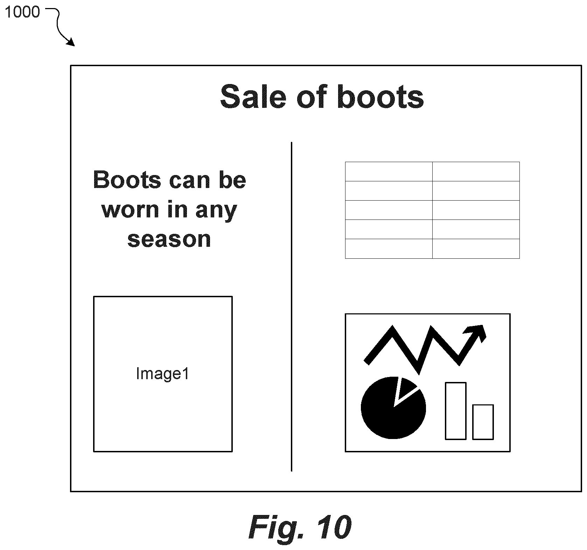

FIG. 10 shows an example target design 1000 generated and displayed on the client system 130 at the end of method 500. In this example, the target design 1000 is a deck format design. The design may be displayed in a user interface similar to UI 350.

The generated design 1000 may further be output in an editable format to allow a user to modify the design. While not shown, application 132 may display (or otherwise provide access to) additional controls that allow a user (e.g. via application 132) to view and edit the generated and output design 1000. Such controls may, for example, enable a user to perform operations such as: adding new pages; deleting pages; reordering pages; adding an element to a particular page; removing an element from a particular page (including removing element that have been automatically generated for the page); editing an element that has been added to a particular page (including editing the elements that have been automatically generated for the page); and/or other operations.

Application 132 may also provide a user with various options for exporting the output design 1000. This may include, for example, one or more options that allow a user to: determine an export location (e.g. on local memory such as 210 or a network accessible storage device); determine an export format (e.g. a file type); determine an export size/resolution; and/or other export options.

Application 132 may further provide a user with various options to share the design 1000. This may include, for example, one or more options that allow a user to determine a format (e.g. file type) and then share the resulting design (e.g. by attaching it to an electronic communication, uploading to a web server, uploading to a social media service, or sharing in an alternative manner). Application 132 may also provide a user with the option of sending a link (e.g. a URL) to the design (e.g. by generating a link and attaching a link to an electronic communication or allowing a user to copy the link).

In the embodiments described above, the source and target designs include visual design elements (e.g., text, images, videos, color, etc.). However, the source and/or target designs need not be restricted to such visual design elements. Instead, the source and/or target designs may include non-visual elements as well, such as music, sounds, or other forms of audio. In such cases, the design records include audio design element(s) that may include (or be associated with): content data which, for an audio element, is data that defines the audio content itself, and Trim data that defines a start time and/or end time for the playback of the audio file.

The audio design element is treated like other elements. For example, in method 600, the conversion module 116 may determine whether the audio design element should be added to the set of transfer elements or not (e.g., because it is relevant or not, or in case the design conversion request specifically indicates that the audio should be retained or stripped). Similarly, in method 700, if the set of transfer elements includes an audio element, it may be converted into an IF element by assigning the <audio> tag, adding a source or path, and adding alternative text. The alternative text may be determined in a similar manner to how it is determined for images and video. When using ML to provide the alternative text, the machine-learning model may be configured to identify and classify what the audio represents. For example, the machine learning model may be configured to determine whether the audio is a song (and which song), is a noise (such as rain, clapping, birds chirping), or some other type of sound. The model may take audio waveforms as input and make predictions as to what the audio represents. In one example, the audio classification model may also generate a description for the audio item that represents what the audio item is.

Further, if it is desirable for target designs to include audio elements as well, the configuration data of one or more design categories can be updated to include instructions to prompt the content generator to either retain any audio elements in the transfer elements or recommend its own audio content. The output can then be converted back into an audio design element for the target design.

*Alternative embodiments*

This section describes alternative embodiments to those described with reference to Figs. 5-10. In particular, it describes two main alternative embodiments - generation and utilization of an intermediate system prompt and generation of a target design style guidance.

In the example embodiments described previously, once the source content is converted into the intermediate format, a prompt for revised content is generated based on the source content and a design generation request and communicated to a machine learning model (e.g., at step 712). The machine learning model then generates revised content based on this prompt and communicates it back to the content generator 118.

Instead of directly generating a prompt for revised content based on the source content, in some embodiments, an intermediate system prompt may be generated first. This intermediate system prompt is then used to generate the prompt for revised content. The intermediate system prompt includes guidance on the format and content of the target design based on the content of the source design. As the intermediate system prompt includes more guidance than the previously described revised content prompt, a less expensive or computationally simpler machine learning model may be utilized to generate the revised content, potentially without noticeable degradation in quality of the target design generation. This can help reduce computational costs and time significantly (especially if the server 110 handles hundreds of thousands of design conversion requests). Further using the intermediate system prompt may result in latency improvements as smaller ML models can be used to generate the outputs, which typically generate outputs much faster than bigger, more complex ML models. In some examples, the ML model used to generate the intermediate system prompt may be the same as the ML model used to generate the revised content.

In order to generate the intermediate system prompt, the design conversion request (generated by the user) includes a user intent (instead of or in addition to the target design category) that further qualifies the design conversion request. For example, if a design conversion request is to convert a source design into a target design category (e.g., email), the user intent may specify that the email is to be short and professional, sharp and funny, or have a friendly tone. This additional qualifying information is provided to an ML model along with the source content and/or the target design category. The ML model may be trained to generate the intermediate system prompt based on the user intent, source content and the target design category. In particular, the machine learning model may analyse the user intent, source content, and target design category to determine a suitable intermediate system prompt that can be provided to another ML model to generate the revised content.

Further still, in the example embodiments described above, the target design may be displayed with limited visual styling. Whatever visual styling is applied to the target design is either based on source design styles, default template styles, or predetermined user preferences. To improve the visual quality of the target designs, according to the target design style guidance embodiments, one or more target design styles may be automatically identified during the conversion process and applied to the revised design content to generate more stylish target designs.

To generate the target design style information, in one embodiment, the source content may be provided to an ML model along with the target design category. The machine learning model may be trained to identify one or more styles based on the source content and/or the target design category. In particular, the ML model may analyse the source content and target design category to determine one or more styles (e.g., professional, funny, catchy, playful, etc.) that can be applied to the target design.

In another embodiment, the revised content generated at step 714 may be provided to an ML model as part of a style prompt. The machine learning model may be trained to identify one or more styles based on the revised content and/or the target design category.

In yet another embodiment, user intent (where available) is provided to an ML model along with the source content and/or the target design category. The ML model may be trained to identify one or more target design styles based on the user intent, source content and the target design category. In particular, the machine learning model may analyse the user intent, source content, and target design category to determine one or more styles (e.g., professional, funny, catchy, playful, friendly, etc.) that can be applied to the revised content.

In another embodiment, when generating the request to transform a source design to a target design, the user may provide a reference design. For example, the user may indicate that the source design in a first category is to be converted into a target design in a second category such that it is styled like a reference design (that the user may upload with the transformation request). In this example, the reference design is provided to an ML model for generating the target design style information. In particular, style components such as fonts, colours, media items, banners, headers and footers, etc., may be identified from the reference document and provided to the ML model. The ML mode may analyse these style components to determine one or more styles, formats, and/or design types that can be applied to the target design.

In still another embodiment, the intermediate system prompt (described above) may be provided to an ML model to determine a style for the target design. The ML model may be trained to identify one or more styles based on the intermediate system prompt. In particular, the ML model may analyse the intermediate system prompt to determine one or more styles (e.g., professional, funny, catchy, playful, friendly, etc.) that can be applied to the revised content.

Once the target design style is determined, this style information can be provided to the server 110 or the client system 130, such that the target design can be stylized based on the style information.

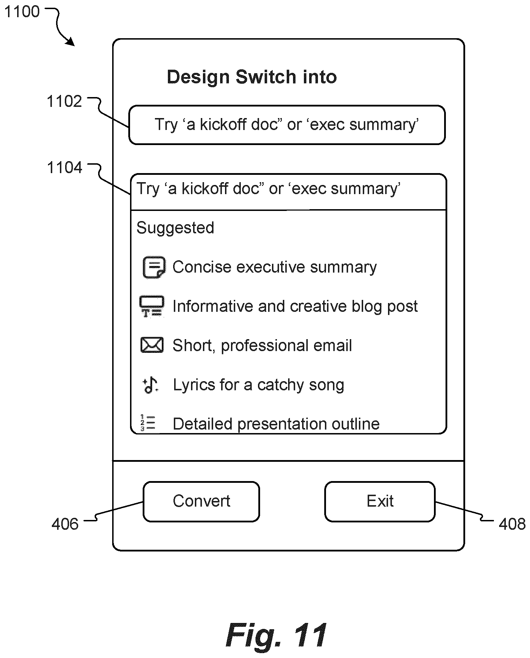

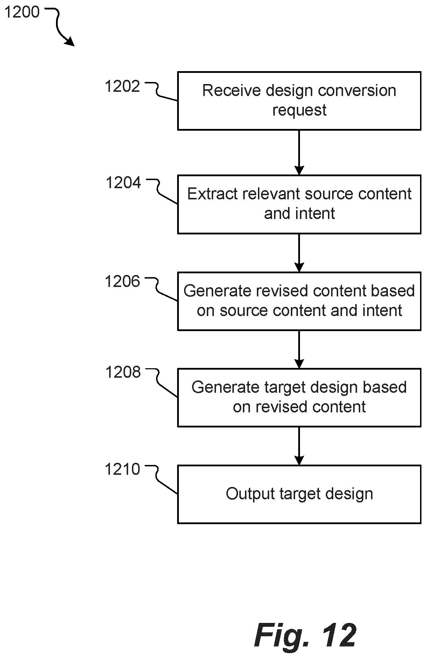

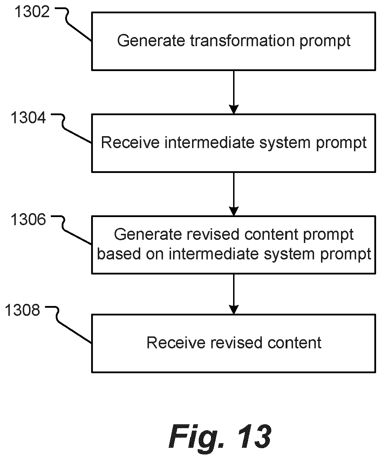

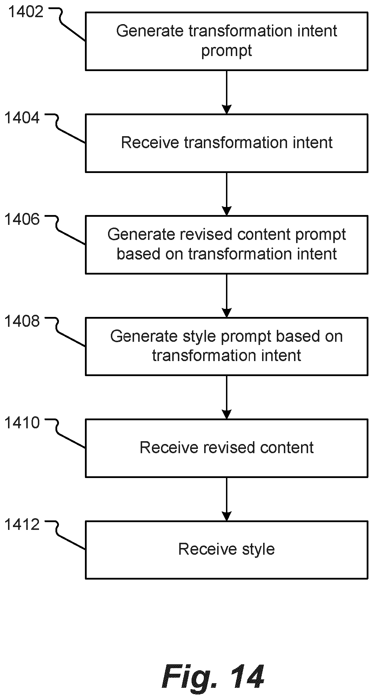

An alternative UI to receive the user intent is described in the following sections with reference to Fig. 11, methods for generating the target design using an intermediate system prompt are described with reference to Figs. 12 and 13 and a method for generating a target design with automatically generated style information is described with reference to Fig. 14.

To provide the user intent, the design conversion UI 400 may be altered. Fig. 11 shows an example conversion UI 1100 that may be used in embodiments where a user provides a user intent when requesting a design conversion.

Conversion UI 1100 includes one or more controls 1102 to select a particular user intent for a target design. In some examples, the one or more controls 1102 may vary depending on the type of the source design and/or target design. For example, if the source design is a deck-type design, such as a presentation deck, the conversion UI 400 may include user intents associated with design categories that a presentation deck can be converted into, such as an informative and creative blog post, a short, professional email, an engaging and informative social media post, a creative poem in the style of Dr. Seuss, a creative script and video description for a 3 minute marketing clip, etc.

The conversion UI 1100 in this example may not include user intent controls associated with design categories a presentation design cannot be converted into, e.g., another presentation deck.

Instead of predetermined or present intent controls, in some embodiments, the UI 1100 includes a free text input form 1102, into which the user may provide an intent for the target document. In some examples, the input form 1102, when selected may display a drop-down menu 1104. The drop-down menu 1104 includes a set of preset intents. The drop-down menu 1104 has two advantages - a user may be able to select any of the present intents if they match the user's intent. Alternatively, the preset intents may provide examples to the user of the type of intent the user can provide in the input form 1102.

In the example conversion UI 1100, the preset intents are in the form of a drop-down menu. In other examples, the preset intent may be in the form of selectable affordances, each displaying the name of the corresponding intent. In other examples, the preset intents may be in other forms, such as check buttons without departing from the scope of the present disclosure.

As with UI 400, UI 1100 may also include mechanisms to select a source design (e.g., to allow a user to select a design other than the design currently displayed in UI 300 or 350), select one or more pages of a source design (e.g., to allow a user to select a range of design pages from a multi-page design to convert), or provide more options for the target design. These mechanisms are not displayed in the example conversion UI 1100. However, a person skilled in the art would appreciate that conversion UI 1100 can be adapted to include these selection mechanisms as described previously with respect to UI 400.

The conversion UI 1100 may also display a control 406 that can be selected by the user after making one or more selections in UI 1100 to trigger a conversion process 1100 and a control 408 for exiting UI 1100 and in effect abandoning the conversion process.

In this example, the user intents include the target design category. Accordingly, UI 1100 does not depict any controls for separately selecting a target design category. However, in other embodiments, the user intents may not include any target design categories. Instead, they may simply include qualifying information such as "short and friendly", "engaging and informative", "catchy", "detailed outline", "concise", etc. In such examples, the UI 100 may include additional controls (e.g., such as controls 402) to select the target design categories.

Referring to FIG. 12, a method 1200 for converting a source design in a first design category to a target design in a second design category using an intermediate system prompt will be described.

In the present example, method 1200 is performed by the server application 114 and the client application 132. The processing described may, however, be performed by one or more alternative applications or modules.

The method 1200 commences at step 1202 where the conversion module 116 receives a design conversion request. The design conversion request may be generated by a client application 132 in response to a trigger action. For example, a user may be viewing/editing a single page design in a UI similar to UI 300 or 350 on the user's client system 130 and may select the design switch control 322. Selection of the design switch control 322 reveals the conversion UI 1100. From the conversion UI 1100, the user may select a particular user intent (e.g., by engaging with input form 1102 and/or 1104) for converting a source design the user was viewing in UI 300 or 350 into a target design.

In another embodiment, the design switch control 322 may be available on the homepage of a digital design application. A user may select the design switch control 322 from this interface, which results in the conversion UI 1100 being displayed. In this example, as the user is not viewing a particular design before selecting the design switch control 322, the conversion UI 1100 may include controls for selecting a source design, and/or selecting one or more pages of the source design. From the conversion UI 1100, the user may select the source design, one or more pages of the source design to convert, and provide a user intent (e.g., by interacting with form 1102 and/or drop-down menu 1104).

It will be appreciated that these are only two examples and that in actual implementation, many different example scenarios may be possible to trigger the design conversion process 1200 and the user may select one or more other additional parameters such as device-specific output format, target design language, whether the user wishes to retain any non-text elements from the source design, a tone for the target design, etc., for the target design. In any case, once a user selects the control 406 to commence the conversion process, the client application 132 generates the design conversion request.

The design conversion request includes a source design identifier and the user intent (which in some embodiments includes a target design category). If the target design category is not part of the user intent, it may be included as a separate field in the design conversion request. In embodiments where a source design selection control is not provided in UI 1100 or a user does not select a source design using a provided control, an identifier of the design being viewed or edited by the user in UI 300 or 350 is selected by default as a source design identifier.

In some embodiments, where the source design is a multipage design and the user has selected a particular set of pages from the multi-page design to convert, the design conversion request also includes identifiers of the selected source design pages. Alternatively, if the page selection control is not provided or a user does not select one or more pages using a provided control, identifiers of all the pages of a multi-page source design are selected by default and added to the design conversion request. Furthermore, if available in the UI 1100 and selected, the design conversion request may also include other target design parameters such as, e.g., a target design type (e.g., deck or document), a language for the target design, information indicating whether any non-text design elements of the source design are to be retained in the target design, a tone for the target design, whether any source formatting is to be retained in the target design, etc.

Once the design conversion request is generated, the client application 132 passes the design conversion request to the conversion module 116.

At step 1204, the conversion module 116 extracts relevant content from the source design identified in the design conversion request. This process is described in detail with reference to Fig. 6 and is therefore not described here again.

At step 1206, the server application 114 generates revised content based at least on the extracted relevant content of the source design and the user intent. This step is described in detail with reference to Fig. 13.

The method then proceeds to step 1208, where the conversion module 116 generates the target design record based on the revised content and the target design type (i.e., document or deck format). This step is described in detail with reference to Figs. 8 and 9 and will therefore not be described here again.

At step 1210, the conversion module 116 communicates the target design to the client application and the client application renders the target design on a display of the user device (e.g., in UI 1000).

An example method for generating revised content for the target design based on the user intent is described next. Generally speaking, this method involves communicating the source content (e.g., in the form of a set of transfer elements) to the content generator 118 along with the user intent and/or other parameters (such as target design category and/or the source design category). The content generator 118 analyses the source content and user intent and generates an intermediate system prompt. The intermediate system prompt is then fed back to the content generator 118 along with the source content and it generates revised design elements (also referred to as revised elements herein). For example, if the source design is a webpage and the user intent is to create a detailed outline for a presentation, the content generator 118 may analyse the content of the webpage and generate an intermediate system prompt of how to convert the content of the webpage into a detailed outline for a presentation. This intermediate system prompt is then provided to the content generator 118 such that it generates a summary of one or more paragraphs that summarizes the webpage based on the guidance provided in the intermediate system prompt and the source content.

In one example, the content generator 118 is a machine learning (ML) system that is configured to analyze the source content and generate the intermediate system prompt based on the user intent. To this end, the ML model may be trained to identify natural language, prose, intent, and context of words to generate the intermediate system prompt. The ML model may also be trained to determine whether non-text content (e.g., images, videos, audio, charts, etc.) may be required for the target design and add guidance about suggesting such non-text elements in the intermediate system prompt.

In one example, a specific ML model may be utilized that is specifically trained to perform the task of analyzing the source content and generating the intermediate system prompt based on the user intent. In this case, an ML model may be fed copious amounts of training data initially to train it - e.g., it may be provided a large number of sets of transfer elements associated with different user intents and their corresponding expected intermediate system prompts (e.g., hundreds of thousands of input/output labelled training data samples). The ML model may be trained on this data until it can accurately generate the expected intermediate system prompts for a given source content and user intent most of the time. Then, at execution time, source content (e.g., in the form of a set of transfer elements) and user intent may be provided to the trained ML model and it outputs the intermediate system prompt.

In other cases, a pre-trained generalized language ML model (that can perform any language-based task) may be utilized. An example of such a generalized ML model is GPT3.5. The ML model in GPT3.5 is trained on vast amounts of text data, such as books, articles, and other written works. This data is used to teach the model how to recognize patterns and relationships between words and phrases, and how to generate new text that sounds natural. Once the model has been trained on this data, it can be used to generate new text in response to any user input. As a generalized ML model of this type may not know the specific task of converting a set of transfer elements into an intermediate system prompt based on a user intent, a small amount of training data (e.g., 10-20 samples of sets of transfer elements and user intents and corresponding intermediate system prompts) may be provided to the ML model in order to teach the ML model to output the expected intermediate system prompts for the given user intent.

In the case of the pre-trained generalized ML model, in some embodiments, the training data may be stored in the data storage 122 and may be provided to the model each time method 1300 is executed - i.e., with each new request. In other embodiments, the training data may be provided once per session with the ML model. The training data is not required with each new request in this embodiment if an active session is maintained with the ML model. Once the session ends, the training data may be provided to the machine learning model again when a new session is initiated.

In some embodiments, the ML model may not be able to understand the set of transfer elements as it may only be able to accept inputs of certain types - e.g., plain-text, HTML, markdown language, etc.). In such cases, the set of transfer elements are first converted into an intermediate format (IF) that can be understood by the ML model. It will be appreciated that if the ML model is specifically trained for this task, it may be trained based on the original format of the set of transfer elements and in such cases, there may be no need to convert the set of transfer elements into the IF.

Fig. 13 illustrates an example method for generating revised content. In this example method, it is assumed that the content generator 118 understands the set of transfer elements in their original format and therefore they are not converted into an IF first. As described above, in other cases, the content generator 118 cannot understand the set of transfer elements in their original format. In this case, the transfer elements may first be converted into IF elements as described with reference to method steps 702-710 described previously.

The method 1300 commences at step 1302 where the conversion module 116 generates a transformation prompt. When the content generator 118 is an LLM, the input is a prompt for that LLM. The content of the prompt depends on the type of LLM system being used. If the LLM is a general purpose LLM, the prompt includes the source data (i.e., the IFD or set of transfer elements), the user intent, and configuration data. The configuration data provides instructions to the LLM to generate the intermediate system prompt.

In case the LLM includes a specific model that has already been trained for the specific task of generating the intermediate system prompt, the transformation prompt may only include the source content and user intent.

The precise format of the configuration data depends on a variety of factors, including the type of LLM (e.g. configuration data for use with OpenAI's GPT4 may differ from the configuration data required for Google's Bard), the training mechanism of the ML model, and the user intent or source content.

In one example, the configuration data for the transformation prompt may include a task description (e.g., to cue the ML system to generate a desired output in the context of a task), task parameters (e.g., output format, word limit, tone of the output, rules, etc.) and/or one or more few-shot training examples of input prompts and the intermediate system prompts the ML system is expected to generate based on those input prompts.

An example of configuration data for the transformation prompt is displayed in the table below.

Table K - example configuration data for the transformation prompt

| Description of task: | *Using the context of <user intent> and <source content>, create a prompt for an LLM which will be tasked with generating revised content* |
|---|---|
| Parameters: | *The user will provide two fields, <intent> and <source content>. Format the output using <u>HTML</u> and written in <u>English</u>.* |

It will be appreciated that the configuration data may include many alternative components and that many alternative approaches to generating a prompt are possible. For example, the configuration data may be (or include) a single pre-assembled template prompt - e.g. a string that includes all the relevant set text components. Alternatively, separate prompts may be generated including separate components and combinations thereof. The LLM can thus be configured by providing the configuration data as a prompt, part of a prompt, or a series of prompts.

The configuration data may be stored in the data storage 122. At step 1302, when generating the prompt, the conversion module 116 may retrieve the configuration data. It may also determine whether the configuration data needs to be updated. For instance, it may include the source design category, the output language, and the output format in the configuration data at runtime - e.g., "the output should be formatted in HTML ...and written in French" - to provide more context to the LLM.

The conversion module 116 then combines the configuration data with the source content and the user intent to generate the transformation prompt. In one embodiment, the conversion module 116 generates the transformation prompt by constructing a text string from one or more component parts of the configuration data, the source content, and the user intent (e.g., by concatenating the component parts, transfer elements, and user intent together). Once the transformation prompt is generated, it is communicated to the content generator 118.

By way of the configuration data, the content generator 118 is cued to generate the intermediate system prompt based, in part, on the source content and the user intent. For example, based on the configuration data shown in the table above, the content generator 118 may be cued to generate the intermediate system prompt that can be sent with the source content to an LLM for transforming the source content into the revised content.

An example of a transformation prompt and the corresponding intermediate system prompt generated at step 1302 is depicted in the table below -

Table L - example transformation prompt and the corresponding intermediate system prompt

| Source content (in markdown) | *Winning with Pushes and Pulls\n\nJohnSmith won the wheelbarrow race! What does this tell you? \n\nAdd a star to \n\nyour answer. \n\nJaneDoe's push was the strongest. \n\nJohnSmith's push was the strongest. \n\nThey pushed with the same force. In InLet's watch this match. Add a star to your answer. \n\nWhat are the children doing \n\nin a game of\n\ntug-of-war?\n\nWhich team created the biggest force?\n\nWhich team will win the game? In \nPushing\n\nPulling\n\n* |
|---|---|
| User intent | *An informative and creative blogpost* |
| Intermediate system prompt | *Using the provided information about JohnSmith, JaneDoe, and the wheelbarrow race, create an engaging and informative blog post. Explore the concepts of pushes and pulls, and how they relate to forces and motion. Include details about the activities of the children, the game of tug-of-war, and which team created the biggest force and consequently, which team will win the game. Highlight the importance of understanding these physics principles to achieve success, as demonstrated by JohnSmith's win in the wheelbarrow race.* |

Once the content generator 118 has generated the intermediate system prompt, the content generator 118 communicates the output back to the conversion module 116 at step 1304.

Next, at step 1306, the conversion module 116 utilizes the intermediate system prompt to generate a revised content prompt.

Much like the case with the transformation prompt, the content of the revised content prompt depends on the type of LLM system being used. If the LLM is a general purpose LLM, the prompt includes the source data (i.e., the IFD or set of transfer elements), the intermediate system prompt, and configuration data. The configuration data provides instructions to the LLM to generate the revised content.

In case the LLM includes a specific model that has already been trained for the specific task of generating revised content, the prompt may only include the source content and the intermediate system prompt and configuration data may not be required.

The precise format of the configuration data depends on a variety of factors, including the type of LLM (e.g. configuration data for use with OpenAI's GPT4 may differ from the configuration data required for Google's Bard), the training mechanism of the ML model, and the content of the source and intermediate system prompt.

In one example, the configuration data for the revised content prompt may include a task description (e.g., to cue the ML system to generate a desired output in the context of a task), task parameters (e.g., output format, word limit, tone of the output, whether to include non-text elements or not, rules, etc.) and/or one or more few-shot training examples of input prompts and the revised content the ML system is expected to generate based on those input prompts.

An example of configuration data for the revised content prompt is displayed in the table below.

Table M - example configuration data for the revised content prompt

| Description of task: | *<intermediate system prompt>* |
|---|---|
| Parameters: | *The user will provide <source content>.*<br>*Format the output using markdown and written in {source document language}*<br>*Include a title. Retain the location of any <item> tags in the markdown output, or remove some that aren't relevant.* |

It will be appreciated that the configuration data may include many alternative components and that many alternative approaches to generating a prompt are possible. For example, the configuration data may be (or include) a single pre-assembled template prompt - e.g. a string that includes all the relevant set text components. Alternatively, separate prompts may be generated including separate components and combinations thereof. The LLM can thus be configured by providing the configuration data as a prompt, part of a prompt, or series of prompts to the LLM.

The configuration data may be stored in the data storage 122. At step 1306, when generating the prompt, the conversion module 116 may retrieve the configuration data and determine whether the configuration data needs to be updated. For instance, it may include or update the output language, and the output format in the configuration data at runtime - e.g., "the output should be formatted in HTML ...and written in French" - to provide more context to the LLM.

The conversion module 116 then combines the configuration data with the source data and the intermediate system prompt to generate the revised content prompt. In one embodiment, the conversion module 116 generates the revised content prompt by constructing a text string from one or more component parts of the configuration data, the source content, and the intermediate system prompt. Once the prompt is generated, it is communicated to the content generator 118.

By way of the configuration data, the content generator 118 is cued to generate revised content based, in part, on the intermediate system prompt and source content. For example, based on the configuration data shown in the table above, the content generator 118 may be cued to generate a blog post summarizing the content of the source content (in case the user intent was for an engaging and informative blog post). When summarizing the source content, it may take into consideration the intermediate system prompt. For example, in the case of the intermediate system prompt described above, the LLM may explore the concepts of pushes and pulls and how they relate to forces and motion. When generating the blog post, it may include details about the activities of the children, the game of tug-of-war, and which team created the biggest force and consequently, which team will win the game. It may also highlight the importance of understanding these physics principles to achieve success, as demonstrated by JohnSmith's win in the wheelbarrow race. As the configuration data dictates that any non-text elements are to be retained (if relevant), the content generator 118 may include one or more non-text elements from the source content.

When generating an output that includes non-text elements, the content generator 118 may select an image element from the source content (if the configuration data encourages the content generator to do so, e.g.). To this end, the content generator 118 may be configured to analyse the descriptions of the image transfer elements in the source content and select the image element from that best matches the revised text content generated by the content generator 118. An example HTML output from the content generator 118 at this step is shown in the table below. In this example, the source design was a presentation deck of six slides on the topic "Farm to Table" and the user intent was an engaging and informative blog post in English.

Table N - example revised content

```
<div>
<h1>Farm to Table: The Evolution of Agriculture</h1>
<img src="cvid://item0" alt="image">
<p>The story of agriculture is a rich tapestry woven through the course of human history... This blog post will take you through the fascinating journey of agriculture, from its humble beginnings to its modem-day manifestations.
</p>
<h2>The Origins of Agriculture</h2>
<img src="cvid://item1" alt="image">
<p>About 12,000 years ago, humans made the transition from hunter-gatherer societies to a more settled lifestyle.....</p>
<h2>From Inequality to the Industrial Revolution</h2>
<img src="cvid://item2" alt="image">
<p>Despite its positive contributions, early agriculture also brought about inequality... </p>
<h2>Green Revolution and Its Impact</h2>
<p>The next significant event in the history of farming was the Green Revolution of the 1960s and 1970s... </p>
<h2>Present Day Agriculture: Urban and Precision Farming</h2>
<img src="cvid://item3" alt="image">
<p>Today, two significant trends are shaping the future of agriculture - urban agriculture and precision farming...</p>
<p>To quote Brian Brett, "Farming is a profession of hope." From its inception to its present state, agriculture has indeed been a beacon of hope, sustaining civilizations, driving progress, and feeding billions.....</p>
</div>
```

In other embodiments, when generating an output that includes non-text elements, the content generator 118 may not be able to select a media element from the source content (e.g., because the source content does not include any media elements, or none of the media elements are suitable for the text content generated by the content generator 118, and/or the configuration data indicates that the content generator 118 can recommend its own image elements). In such cases, the content generator 118 may generate a media query that can be subsequently used by the conversion module 116 to perform a search in a media library for a media item that matches the media query. This is similar to the process described with reference to Fig. 7 and therefore is not described here again.

Once the content generator 118 has generated the revised content, the content generator 118 communicates the output back to the conversion module 116 at step 1308. In some embodiments, the output is in the intermediate format.

The target design can then be generated based on the revised content (at step 1208) using, e.g., the method described with reference to Fig. 8 previously. For example, if the output is in the intermediate format, it may be converted back to generate the target design plan descriptor as described in methods 800 and 900. Once the target plan descriptor is generated, it is communicated to the client system 130. The client system 130 can then generate the target design based on the target plan descriptor as described in other embodiments.

Fig. 14 is a flowchart illustrating an example method for generating revised content including style guidance. As can be seen in Fig. 14, steps 1402, 1404, 1406 and 1410 are similar to method steps 1302-1308 and therefore these steps are not described in detail again herein.

The method 1400 commences at step 1402, where the transformation prompt is generated. Next, the intermediate system prompt is received from the content generator 118 and used to generate the revised content prompt.

At step 1408, the intermediate system prompt is utilized to generate a style prompt - the style prompt cues an LLM to generate a document style that best describes the content of the intermediate system prompt. The content of the prompt depends on the type of LLM system being used. If the LLM is a general purpose LLM, the prompt includes the intermediate system prompt and configuration data. The configuration data provides instructions to the LLM to generate the target design style.

In case the LLM includes a specific model that has already been trained for the specific task of generating the target design style, the style prompt may only include the intermediate system prompt. In such cases, configuration data is not required.

The precise format of the configuration data depends on a variety of factors, including the type of LLM (e.g. configuration data for use with OpenAI's GPT4 may differ from the configuration data required for Google's Bard) and the training mechanism of the ML model.

In one example, the configuration data for the style prompt may include a task description (e.g., to cue the ML system to generate a desired output in the context of a task), task parameters (e.g., output format, word limit, tone of the output, rules, etc.) and/or one or more few-shot training examples of the intermediate system prompts and the target design styles the ML system is expected to generate based on those input prompts.

An example of configuration data for a style prompt is displayed in the table below. In this example, the LLM is provided a list of styles (e.g., those maintained by server 110) and asked to select a target design style from that list.

Table O - Example configuration data for the style prompt

| Description of task: | *Analyze the <intermediate system prompt> and classify the intended style of a resulting target design into one of the following categories: A, B, or C.* |
|---|---|
| Parameters: | *Return only the label corresponding to the category.* <br> *Category definitions:* <br> *A: documents intended for purpose abc.* <br> *B: documents designed for purpose xyz.* <br> *C: documents designed for purpose 123.* <br> *To classify, consider the purpose, tone and language of the resulting document.* |
| Examples: | Instructions: "Transform the content of this document into a song about ...." <br> Classification: B <br> Rationale: These instructions suggest... typical of category 'B'. <br> Instructions: "Create a walkthrough guide for teachers to check and understand students' comprehension of needs vs. wants, using the provided activity." <br> Classification: A <br> Rationale: This task involves ... typical of category 'A'. |

The configuration data may be stored in the data storage 122. At step 1408, when generating the style prompt, the conversion module 116 may retrieve the configuration data, and combine it with the intermediate system prompt to generate the style prompt. In one embodiment, the conversion module 116 generates the style prompt by constructing a text string from one or more component parts of the configuration data and the intermediate system prompt. Once the style prompt is generated, it is communicated to the content generator 118.

By way of the configuration data, the content generator 118 is cued to generate the target design style based on the intermediate system prompt. For example, based on the configuration data shown in the table above, the content generator 118 may be cued to generate a style label after analysing the intermediate system prompt.

An example of a style prompt and the corresponding target design style generated at step 1408 is depicted in the table below -

Table P - Example target design style prompt and target design style output

| Input | *Given the instruction: Using the provided information about JohnSmith, JaneDoe, and the wheelbarrow race, create an engaging and informative blog post. Explore the concepts of pushes and pulls, and how they relate to forces and motion. Include details about the activities of the children, the game of tug-of-war, and which team created the biggest force and consequently, which team will win the game. Highlight the importance of understanding these physics principles to achieve success, as demonstrated by John-Smith's win in the wheelbarrow race. Return the label (A, B, C) that best describes the intended document style.* |
|---|---|
| Output | *A* |

Once the content generator 118 has generated the target design style, the content generator 118 communicates the output back to the conversion module 116 at step 1412.

The conversion module 116 then processes the output from steps 1410 and 1412 (i.e., the revised content and the document style) to generate a target design plan descriptor. The target plan descriptor may be similar to the target plan descriptor described previously with reference to Figs. 8 and 9 and therefore neither it nor the method of generating it will be described herein again. However, it will be appreciated that in the present embodiment, the target plan descriptor includes an additional field for the style of the target design.

Once the target plan descriptor is generated, it is used to generate the target design. In some embodiments, as described previously, the conversion module 116 generates the target design. In other embodiments, the target plan descriptor may be communicated to the client system 132 and the client system may generate the target design based on the target plan descriptor.

In any case, a determination is initially made if the target design is required in a document or deck format. This is similar to step 813.

If it is determined that the target design type is document format, a document format design is generated based on the target design plan descriptor. This involves e.g., creating a document record based on the target design plan descriptor. The document record includes an ordered sequence (such as an array or other ordered set) of the target design elements from the target design plan descriptor. The style of the document record, i.e., the background, the font type, font size, font colour, spacing, etc., for the target design elements may be determined based on the document style field present in the target plan descriptor and the source document styling. For example, if the document style is A, the conversion module or client application identifies one or more existing style templates that match the document style A and selects one of the matching style templates for stylizing the target design. The style template may be selected randomly from the list of matching style templates or may be selected based on a similarity ranking of the style templates.

The styling template may be utilized, e.g., to style the header of the document to include a banner in line with the selected style. The font style of the header and body text may be preserved from the source design or selected based on the selected style template.

Alternatively, if it is determined that the target design type is a deck format, the target design plan is analysed to generate analysis data. This was previously described with reference to method step 816 and is therefore not described herein again.

The analysis data and document style field is used to match the target design plan to one or more deck-format design templates 126 stored in data storage 122. In particular, the analysis data and document style for the target design plan is compared with the analysis data and document style of design templates 126 to identify one or more design templates that may be compatible with the content of the target design plan and the document style. The comparison may include comparing the values of the analysis objects in the design templates with the values of the analysis objects in the target design plan and comparing the value of the document style field in the target design plan with the document styles of the design templates 126. Design templates that have analysis object values and a document style that match the analysis object values and the document style of the target design plan are selected as compatible templates.

Once compatible design templates are identified, a design template is selected. If only one compatible design template is identified, that design template may be automatically selected. Alternatively, if a set of compatible design templates are identified, one design template may be selected from the set. The selection may be done based on one or more predefined criteria - e.g., the most compatible design template (if compatibility scores are computed and available) may be selected, or the first design template in the set may be selected.

In some embodiments, the user may select the design template. In such embodiments, if a set of compatible design templates are identified, the client application 142 may display the templates on the client system for user selection.

Thereafter, the design elements from the target design plan are transferred into the selected design template, that is, the design elements (i.e., text content, table, and/or media items) are transferred into corresponding destination elements of the selected design template. Further, the styles of the various template elements are applied to the corresponding design elements.

Although method steps 1406 and 1408 are depicted sequentially in method 1400, this need not be the case in actual implementation. Instead, to reduce latency, these steps can be performed in parallel. Similarly, method steps 1410 and 1412 may be performed in parallel instead of sequentially.

Further still, if method steps 1406 and 1408 are performed sequentially, e.g., if method step 1408 is performed after the revised content is generated by the content generator 118, the revised content may be provided as an input in the style prompt to further improve the accuracy of the style classification.

In yet another embodiment, instead of generating two separate prompts - i.e., a style prompt and a revised content form, a single prompt can be generated, which can be used to cue the ML model to generate revised content for the target design and provide a target design style label. In this case, steps 1408 and 1408 may be combined into a single step and steps 1410 and 1412 can be combined into a single step.

## Clauses

Further examples of specific feature combinations taught within the present disclosure are set out in the following sets of numbered clauses -

Clause A1. A computer implemented method for converting a source design in a first design category to a target design in a second design category, the method including: processing the source design to identify a set of transfer design elements from the source design; generating a set of revised design elements based at least on the set of transfer design elements and the second design category; and generating the target design based on the set of revised design elements.

Clause A2: The computer-implemented method of clause A1, wherein processing the source design to identify the set of transfer design elements comprises: determining whether each design element in the source design is relevant to generation of the target design; adding a design element in the source design that is determined to be relevant to the target design to the set of transfer design elements; and forgoing adding a design element in the source design to the set of transfer design elements that is determined to not be relevant to the target design.

Clause A3: The computer-implemented method of clause A2, wherein determining whether a design element in the source design is relevant to the generation of the target design is based on the target design category and one or more predetermined conditions.

Clause A4: The computer-implemented method of clause A2, wherein processing the source design to identify the set of transfer design elements further comprises: determining whether a design element in the source design is a decorative element, and in response to determining that the design element in the source design is a decorative element, forgoing adding the design element to the set of transfer design elements.

Clause A5: The computer-implemented method of any one of clauses A1-A4 wherein generating the one or more revised design elements comprises: generating an input prompt, the input prompt comprising the set of transfer elements and configuration data; communicating the input prompt to a machine learning model configured to generate the set of revised design elements based on the input prompt; and obtaining the set of revised design elements from the machine learning model.

Clause A6: The computer-implemented method of clause A5, wherein the configuration data includes one or more of: a task description; and task parameters, and wherein the task description includes at least the second design category.

Clause A7: The computer-implemented method of clause A6, wherein the configuration data varies depending on a type of the second design category.

Clause A8: The computer-implemented method of clause A5, wherein the set of transfer elements are in a first format and the method further comprises converting the set of transfer elements from the first format into a set of intermediate format elements, wherein the intermediate format elements are in an intermediate format that is acceptable by the machine learning model.

Clause A9: The computer-implemented method of clause A8, wherein obtaining the set of revised design elements comprises: receiving revised content from the machine learning model in the intermediate format; and generating the set of revised design elements from the revised content by converting the intermediate format into the first format.

Clause A10: The computer-implemented method of any one of clauses A1-A9, further comprising generating a target design plan descriptor, the target design plan descriptor comprising the set of revised design elements.

Clause A11: The computer-implemented method of clause A10 further comprising determining a design type of the target design, the design type being one of a deck format design or a document format design.

Clause A12: The computer-implemented method of clause A11 further comprising generating a document format target design from the target design plan descriptor upon determining that the design type of the target design is the document format design, wherein generating the document format target design comprises ordering the set of revised design elements according to their viewing order.

Clause A13: The computer-implemented method of clause A11, further comprising: determining that the design type of the target design is the deck format design; identifying a design template from a set of design templates that is compatible with the set of revised elements in the target design plan descriptor; and transferring the set of revised elements from the target design plan descriptor to corresponding placeholder elements of the design template to generate the target design.

Clause A14: The computer-implemented method of clause A11, further comprising: determining that the design type of the target design is the deck format design; identifying a design template from a set of design templates based on the second design category; analysing the design template to identify design elements in the design template; and updating the at least one instruction in the task parameters in relation to the set of revised design elements based on the identified design elements in the design template.

Clause A15: The computer-implemented method of clause A14, wherein the set of revised design elements match the identified design elements in the design template, and generating the target design based on the set of revised design elements including transferring the set of revised elements to corresponding design elements in the design template.

Clause A16: The computer-implemented method of clause A9, wherein the revised content comprising one or more media queries.

Clause A17: The computer-implemented method of clause A16, further comprising: for each media query: performing a search for a media item in a media library; selecting a media item matching the media query from a set of search results; adding the selected media item to the target design plan descriptor as a new revised design element; and assigning a viewing order to the new revised design element.

Clause A18: The computer-implemented method of any one of clauses A2 to A17, wherein the machine-learning model is a generative large language model.

Clause B1: A computer-implemented method for converting a set of source design elements from a source design into revised design elements, the method comprising: processing the source design to identify the set of source design elements, the set of source design elements including at least one text element; analysing the set of source elements to generate a set of transfer elements that include at least a subset of the source elements and the at least one text element; generating an input prompt, the input prompt including the set of transfer elements and at least one instruction for generating the set of revised elements based on the set of transfer elements; communicating the input prompt to a machine learning model configured to generate revised design elements based on the input prompt; receiving the set of revised design elements from the machine learning model, the set of revised design elements including at least one text design element that is based on the at least one source text design element but in a different form.

Clause B2: The computer-implemented method of clause B1, wherein analysing the source design to generate the set of transfer elements comprises: determining whether each source design element is relevant to the generation of the revised design elements; adding a source design element that is determined to be relevant to the revised design elements to the set of transfer elements; and forgoing adding a source design element to the set of transfer elements that is determined to not be relevant to the generation of the revised elements.

Clause B3: The computer-implemented method of clause B2, wherein determining whether a source design element is relevant to the generation of the target design is based on one or more predetermined conditions.

Clause B4: The computer-implemented method of clause B3, wherein determining whether a source design element is relevant to the generation of the revised elements comprises: determining whether the source design is a decorative element, and in response to determining that the source design element is a decorative element, forgoing adding the source design element to the set of transfer elements.

Clause B5: The computer-implemented method of clause B3: wherein determining whether a source design element is relevant to the generation of the revised elements comprises: determining whether the source design element is a text element including one or more criteria of: solely non-alphanumeric characters, a single character; a two-digit numeral; and in response to determining that the source design element is a text element including the one or more criteria, forgoing adding the source design element to the set of transfer elements.

Clause B6: The computer-implemented method of clause B3: wherein determining whether a source design element is relevant to the generation of the revised elements comprises: determining whether the source design element is a shape element including one or more criteria of: a fill of the shape element is a colour fill, a fill of the shape element is an incomplete fill, or the fill of the shape does not include an object; and in response to determining that the source design element is a shape element include one or more of the criteria, forgoing adding the source design element to the set of transfer elements.

Clause B7: The computer-implemented method of clause B3: wherein determining whether a source design element is relevant to the generation of the revised elements comprises: determining whether the source design element is a chart or table element; and in response to determining that the source design element is a chart or table element, adding the source design element to the set of transfer elements.

Clause B8: The computer-implemented method of any one of clauses B1-B7, wherein generating the set of transfer elements comprises ordering the set of transfer elements based on a viewing order of corresponding source design elements in the source design.

Clause B9: The computer-implemented method of any one of clauses B1-B8, further comprising determining whether two or more source design elements in the source design should be grouped and upon determining that two or more source design elements should be grouped, grouping the two or more source design elements into a single group design element before processing the source design elements to generate the set of transfer elements.

Clause B10: The computer-implemented method of any one of clauses B1-B9 wherein the input prompt further includes a task description that includes a design category for the revised design elements.

Clause B11: The computer-implemented method of clause B10, wherein the at least one instruction for generating the set of revised elements varies depending on a type of the design category.

Clause B12: The computer-implemented method of any one of clauses B1-B11, wherein the set of transfer elements are in a first format and the method further comprises converting the set of transfer elements from the first format into a set of intermediate format elements, wherein the intermediate format elements are in an intermediate format that is acceptable by the machine learning model.

Clause B13: The computer-implemented method of clause B12, wherein obtaining the set of revised design elements comprises: receiving revised content from the machine learning model in the intermediate format; and generating the set of revised design elements from the revised content by converting the intermediate format into the first format.

Clause C1: A computer-implemented method for generating a digital design, the method comprising: generating an input prompt, the input prompt including a task description for using a set of input design elements to generate a set of output design elements, and at least one design parameter for generating the set of output design elements;

communicating the input prompt to a machine learning model configured to generate the set of output design elements based on the input prompt; receiving the set of output design elements from the machine learning model, wherein at least one of the output design element is different from any of the input design elements, and generating the digital design based on the set of output design elements.

Clause C2: The computer-implemented method of clause C1, wherein the task description includes at least a design category.

Clause C3: The computer-implemented method of clause C2, wherein the at least one design parameter varies depending on a type of the design category.

Clause C4: The computer-implemented method of any one of clauses C1-C3, further comprising generating a design plan descriptor, the design plan descriptor comprising the set of output design elements, each output design element associated with an order attribute determined based on the position of the output design element in the set of output design elements.

Clause C5: The computer-implemented method of clause C4 further comprising determining a design type of the digital design, the design type being one of a deck format design or a document format design.

Clause C6: The computer-implemented method of clause C5 further comprising generating a document format digital design from the design plan descriptor upon determining that the design type of the digital design is the document format design, wherein generating the document format target design comprises ordering the set of output design elements in the digital design according to the order attribute of the output design elements.

Clause C7: The computer-implemented method of clause C5, further comprising: determining that the design type of the target design is the deck format design; identifying a design template from a set of design templates that is compatible with the set of output design elements in the design plan descriptor; and transferring the set of output design elements from the design plan descriptor to corresponding placeholder elements of the design template to generate the digital design.

Clause C8: The computer-implemented method of clause C5, further comprising: determining that the design type of the target design is the deck format design; identifying a design template from a set of design templates based on the design category; analysing the design template to identify placeholder design elements in the design template; and updating the at least one design parameter based on the identified placeholder design elements in the design template.

Clause C9: The computer-implemented method of clause C8, wherein generating the digital design based on the set of output design elements including transferring the set of output design elements to corresponding placeholder design elements in the design template.

Clause C10: The computer-implemented method of any one of clauses C1-C9, wherein the set of output design elements comprising one or more media queries.

Clause C11: The computer-implemented method of clause C10, further comprising: for each media query: performing a search for a media item in a media library; selecting a media item matching the media query from a set of search results; adding the selected media item to the design plan descriptor as a new design element; and assigning an order attribute to the new design element based on the order in which the media query was present in the set of output design elements.

Clause C12: The computer-implemented method of any one of clauses C1 to C11, wherein the machine-learning model is a generative large language model.

Clause D1: A computer-implemented method for generating an output design based on an input design, the input design including a set of input design elements that includes an input non-text design element associated with non-text content, the method comprising: converting the set of input design elements into a set of intermediate design elements, wherein the converting includes converting the input non-text design element into an intermediate format element, the intermediate format element including an identifier for the non-text content; providing the intermediate design elements to a machine learning model along with a prompt for generating revised design elements based on the intermediate design elements; receiving a set of revised design elements from the machine learning model, wherein the set of revised design elements includes a revised non-text element that corresponds to the intermediate format element, and wherein the revised non-text element includes the identifier of the non-text content; and generating the output design based on the set of revised design elements, wherein generating the output design comprises: generating a first output design element corresponding to the first revised element; associating the first output design element with the first non-text content based on the identifier of the first non-text content; and adding the first output design element to the output design.

Clause D2: The computer-implemented method of clause D1, wherein the intermediate format is HTML.

Clause D3: The computer-implemented method of clause D2, wherein the input non-text design element is one of an image design element, a video design element, a diagram design element, or a table design element and the intermediate format element includes an HTML tag, a path to the non-text content, and a description of the non-text content, wherein the path to the non-text content is the identifier of the intermediate format element.

Clause D4: The computer-implemented method of clause D2 wherein the non-text design element is a chart design element and the intermediate format element includes a path to the non-text content, and a description of the non-text content, wherein the path to the non-text content is the identifier of the intermediate format element.

Clause D5: The computer-implemented method of clause D4, wherein the intermediate format does not include a tag corresponding to the chart design element and the intermediate format element includes an HTML image tag.

Clause D6: The computer-implemented method of any one of clauses D3-D4, wherein the description of the input non-text content is based on metadata associated with the input non-text design element.

Clause D7: The computer-implemented method of any one of clauses D3-D4, wherein the description of the non-text content is based on an extension of the non-text content.

Clause D8: The computer-implemented method of any one of clauses D3-D4, further comprising: generating the description of the non-text content, wherein generating the description of the non-text content comprises retrieving the non-text design element, and analysing the non-text content.

Clause D9: The computer-implemented method of clause D8, wherein analysing the non-text content is performed by a machine-learning model that is trained to generate the description based on the analysed content.

Clause D10: The computer-implemented method of any one of clauses D1-D9 wherein receiving the set of revised design elements, comprises: receiving intermediate format text from the machine learning model; and converting the intermediate format text into the set of revised design elements.

Clause D11: The computer-implemented method of clause D10, wherein the intermediate format text is in HTML.

Clause D12: The computer-implemented method of claim D11, wherein converting the intermediate format text into the set of revised design elements comprises: parsing the HTML text to identify individual revised intermediate design elements, each individual revised intermediate design element including an HTML tag; and converting the identified individual revised intermediate design elements into the set of revised design elements based on the HTML tags.

Clause D13: The computer-implemented method of clause D10, wherein the individual revised intermediate design elements includes a text design element, and converting the text design element into the revised design element comprises applying predefined format data to the text design element based on the HTML tag.

Clause D14: The computer-implemented method of clause D10, wherein the individual revised intermediate design elements includes a text design element, and converting the text design element into the revised design element comprises applying format data to the text design element based on format data of the input design.

Clause D15: The computer-implemented method of clause D10, wherein the individual revised intermediate design elements includes a text design element, and converting the text design element into the revised design element comprises retrieving design preference data associated with a user for whom the output design is generated and applying preferred user format data to the text design element.

Clause D16: The computer-implemented method of any one of clauses D1-D15, wherein the input prompt includes a first prompt component instructing the machine learning model that the intermediate design elements can be moved, retained, or deleted when generating the set of revised design elements.

Clause D17: The computer-implemented method of clause D1, wherein the intermediate design elements and the revised design elements are markdown elements.

Clause D18: The computer-implemented method of clause D17, where the intermediate format element is a markdown element that includes: a link component that is associated with the identifier of the non-text content; and an alternative text component that describes the non-text content.

Clause D19: The computer-implemented method of clause D17 or D18 wherein the revised non-text element is a markdown element that includes: a source tag that is associated with the identifier of the non-text content.

Clause D20: The computer-implemented method of any one of clauses D2-19, wherein the identifier of the non-text content is not a universal resource locator (URL).

Clause E1: A computer-implemented method for converting a source design in a first design category to a target design in a second design category, the method comprising: receiving a design conversion request, the design conversion request including source design content and a user intent, the user intent identifying a target design category and qualifying information for the target design; generating a transformation prompt, the transformation prompt including a task description for using the source design content and the user intent to generate an intermediate system prompt for a machine learning model to generate revised content; communicating the transformation prompt to a machine learning model configured to generate the intermediate system prompt; receiving the intermediate system prompt from the machine learning model; generating a revised content prompt, the revised content prompt including the intermediate system prompt as a task description and including the source design content; communicating the revised content prompt to the machine learning model configured to generate a set of revised design elements based on the intermediate system prompt; receiving the revised content from the machine learning model, wherein at least some of the revised content is different from the content of the source design; and generating the target design based on the revised content.

Clause E2: The computer-implemented method of clause E1, wherein the transformation prompt further including the content of the source design and the user intent.

Clause E3: The computer-implemented method of any one of clauses E1-E2, further comprising generating a design plan descriptor, the design plan descriptor comprising the revised content as a set of revised design elements, each revised design element associated with an order attribute determined based on a position of the revised design element in the set of revised design elements.

Clause E4: The computer-implemented method of clause E3 further comprising determining a design type of the target design, the design type being one of a deck format design or a document format design.

Clause E5: The computer-implemented method of Clause E4 further comprising generating a document format target design from the design plan descriptor upon determining that the design type of the target design is the document format design, wherein generating the document format target design comprises ordering the set of revised design elements in the target design according to the order attribute of the revised design elements.

Clause E6: The computer-implemented method of clause E5, further comprising: determining that the design type of the target design is the deck format design; identifying a design template from a set of design templates that is compatible with the set of revised design elements in the design plan descriptor; and transferring the set of revised design elements from the design plan descriptor to corresponding placeholder elements of the design template to generate the target design.

Clause E7: The computer-implemented method of clause E5, further comprising: determining that the design type of the target design is the deck format design; identifying a design template from a set of design templates based on the second design category; analysing the design template to identify placeholder design elements in the design template; and transferring the set of revised design elements to corresponding placeholder design elements in the design template to generate the target design.

Clause E8: The computer-implemented method of any one of clauses E3-E7, wherein the set of revised design elements comprising one or more media queries.

Clause E9: The computer-implemented method of clause E8, further comprising: for each media query: performing a search for a media item in a media library; selecting a media item matching the media query from a set of search results; adding the selected media item to the design plan descriptor as a new design element; and assigning an order attribute to the new design element based on the order in which the media query was present in the set of output design elements.

Clause E10: The computer-implemented method of any one of clauses E1-E9, wherein the machine learning model is a generative large language model.

Clause E11: The computer-implemented method of any one of clauses E3-E7, wherein generating the set of revised design elements comprises ordering the set of revised design elements based on a viewing order of corresponding source design elements in the source design.

Clause E12: The computer-implemented method of any one of clauses E3-E12, further comprising: receiving the revised content from the machine learning model in an intermediate format; and generating the set of revised design elements from the revised content by converting the intermediate format into a first format.

Clause E13: The computer-implemented method of clause E12, wherein the intermediate format is markdown or HTML.

Clause E14: The computer-implemented method of any one of clauses E1-E13, further comprising: generating a style prompt, the style prompt including a task description to generate a target design style type indicator; communicating the style prompt to the machine learning model configured to generate the target design style type indicator based on the style prompt; receiving the target design style type indicator from the machine learning model; and stylizing the target design based on the target design style type indicator.

Clause E15: The computer-implemented method of clause E14, wherein the style prompt includes the intermediate system prompt and the machine learning model is configured to generate the target design style type indicator based on the intermediate system prompt.

Clause E16: The computer-implemented method of clause E14, wherein the style prompt includes the revised content and the machine learning model is configured to generate the target design style type indicator based on the revised content.

Clause E17: The computer-implemented method of clause E14, wherein the style prompt includes a reference design and the machine learning model is configured to generate the target design style type indicator based on the reference design.

Clause E18: The computer-implemented method of clause E14, wherein the style prompt includes the source design content and the user intent and the machine learning model is configured to generate the target design style type indicator based on the source design content and the user intent.

Clause E19: The computer-implemented method of any one of clause E14-E18, wherein the style prompt includes a task description for identifying the target design style type from a set of design style types.

Clause E20: The computer-implemented method of any one of clauses E14-E19, wherein stylizing the target design based on the target design style type includes updating at least one of a font size, a font type, a font colour, a heading banner, or a background of the target design based on the target design style type.

Clause E21: The computer-implemented method of any one of clauses E14-E20, further comprising: determining that the design type of the target design is a deck format design; identifying a design template from a set of design templates that is compatible with the set of revised design elements in the design plan descriptor and has a design style type matching the target design style type; and transferring the set of revised design elements from the design plan descriptor to corresponding placeholder elements of the design template to generate the target design.

Clause E22: The computer-implemented method of any one of clauses E14-E20, further comprising: determining that the design type of the target design is a deck format design; identifying a design template from a set of design templates based on the second design category and the target design style type; analysing the design template to identify placeholder design elements in the design template; and transferring the set of revised design elements to corresponding placeholder design elements in the design template to generate the target design.

Clause F1. A computer processing system including: one or more processing units; and one or more non-transitory computer-readable storage media storing instructions, which when executed by the one or more processing units, cause the one or more processing units to perform a method qaccording to: any one of clauses A1 to A18; any one of clauses B1 to B13; any one of clauses C1 to C11; any one of clauses D1 to D15; or any one of clauses E1 to E22.

Clause E2. One or more non-transitory storage media storing instructions executable by one or more processing units to cause the one or more processing units to perform a method according to: any one of clauses A1 to A18; any one of clauses B1 to B13; any one of clauses C1 to C11; any one of clauses D1 to D15; or any one of clauses E1 to E22.

In the embodiments described above, processing is described as being performed by specific applications or modules. Variations are possible, and generally speaking an operation that is described as being performed by one particular application or module could be performed by an alternative application or module.

The flowcharts illustrated in the figures and described above define processing blocks operations in particular orders to explain various features. In some cases the processing described and illustrated may be able to be performed in a different order to that shown/described, one or more operations may be combined into a single operation, a single operation may be divided into multiple separate operations, one or more process steps may be omitted, and/or the function(s) achieved by one or more of the described/illustrated operations may be achieved by one or more alternative operations. Still further, the functionality/processing of a given flowchart operation could potentially be performed by different systems or applications than that described.

In the above description, certain operations and features are explicitly described as being optional. This should not be interpreted as indicating that if an operation or feature is not explicitly qqdescribed as being optional it should be considered essential. Even if an operation or feature is not explicitly described as being optional, it may still be optional.

The present disclosure provides various user interface examples. It will be appreciated that alternative user interfaces are possible. Such alternative user interfaces may provide the same or similar user interface features to those described and/or illustrated in different ways, provide additional user interface features to those described and/or illustrated, or omit certain user interface features that have been described and/or illustrated.

In some instances, the present disclosure and/or claims use the terms "first," "second," etc. to identify and distinguish between features. When used in this way, these terms are not used in an ordinal sense and are not intended to imply any particular order. For example, a first feature could equally be referred to a second feature without departing from the scope of the described examples. Furthermore, when used to differentiate features, a second feature could exist without a first feature or a second feature could occur or be ordered before a first feature.

Unless otherwise stated, the terms "include" and "comprise" (and variations thereof such as "including", "includes", "comprising", "comprises", "comprised" and the like) are used inclusively and do not exclude further features, components, integers, steps, or elements.

It will be understood that the embodiments disclosed and defined in this specification extend to alternative combinations of two or more of the individual features mentioned in or evident from the text, drawings, or clauses. These different combinations constitute alternative qqqembodiments of the present disclosure.

The present specification describes various embodiments with reference to numerous specific details that may vary from implementation to implementation. No limitation, element, property, feature, advantage, or attribute that is not expressly recited in a claim should be considered as a required or essential feature. Accordingly, the specification and drawings are to be regarded in an illustrative rather than a restrictive sense.

## Claims

1. A computer-implemented method for converting a source design in a first design category to a target design in a second design category, the method including:

   processing the source design to identify a set of transfer design elements from the source design;
   generating a set of revised design elements based at least on the set of transfer design elements and the second design category; and
   generating the target design based on the set of revised design elements.

2. The computer-implemented method of claim 1, wherein processing the source design to identify the set of transfer design elements comprises:

    determining whether each design element in the source design is relevant to generation of the target design; adding each design element in the source design that is determined to be relevant to the generation of the target design to the set of transfer design elements; and forgoing adding a design element in the source design to the set of transfer design elements that is determined to not be relevant to the generation of the target design.

3. The computer-implemented method of claim 2, wherein determining whether each design element in the source design is relevant to the generation of the target design is based on the target design category and one or more predetermined conditions.

4. The computer-implemented method of claim 2, wherein processing the source design to identify the set of transfer design elements further comprises:

    qqdetermining whether a design element in the source design is a decorative element, and in response to determining that the design element in the source design is a decorative element, forgoing adding the design element to the set of transfer design elements.

5. The computer-implemented method of any one of claims 1-4 wherein generating the one or more revised design elements comprises:

    generating an input prompt, the input prompt comprising the set of transfer elements and configuration data; communicating the input prompt to a machine learning model configured to generate the set of revised design elements based on the input prompt; and obtaining the set of revised design elements from the machine learning model.

6. The computer-implemented method of claim 5, wherein the configuration data includes one qqor more of:

    a task description and task parameters, wherein the task description includes at least the second design category, and the task parameters include at least one instruction in relation to the set of revised design elements; and preferably the configuration data varies depending on a type of the second design category.

7. The computer-implemented method of claim 5, wherein the set of transfer elements are in a first format and the method further comprises converting the set of transfer elements from the first format into a set of intermediate format elements, wherein the intermediate format elements are in an intermediate format that is acceptable by the machine learning model.

8. The computer-implemented method of claim 7, wherein obtaining the set of revised design elements comprises:

    receiving revised content from the machine learning model in the intermediate format; and qqgenerating the set of revised design elements from the revised content by converting the intermediate format into the first format.

9. The computer-implemented method of any one of claims 1-8, further comprising:

    generating a target design plan descriptor, the target design plan descriptor comprising the set of revised design elements; determining a design type of the target design, the design type being one of a deck format design or a document format design.

10. The computer-implemented method of claim 9 further comprising generating a document format target design from the target design plan descriptor upon determining that the design type of the target design is the document format design, wherein generating the document format target design comprises ordering the set of revised design elements according to their respective viewing order.

11. The computer-implemented method of claim 9, further comprising:

determining that the design type of the target design is the deck format design;
identifying a design template from a set of design templates that is compatible with the set of revised elements in the target design plan descriptor; and
transferring the set of revised elements from the target design plan descriptor to corresponding placeholder elements of the design template to generate the target design.

12. The computer-implemented method of claim 9, further comprising:

determining that the design type of the target design is the deck format design;
identifying a design template from a set of design templates based on the second design category;
analysing the design template to identify design elements in the design template; and
updating the at least one instruction in the task parameters in relation to the set of revised design elements based on the identified design elements in the design template.

13. The computer-implemented method of claim 12, wherein the set of revised design elements match the identified design elements in the design template, and generating the target design based on the set of revised design elements including transferring the set of revised elements to corresponding design elements in the design template.

14. The computer-implemented method of claim 8, wherein the revised content comprising one or more media queries, the method further comprising:
for each media query:

performing a search for a media item in a media library;
selecting a media item matching the media query from a set of search results; and
adding the selected media item to the target design plan descriptor as a new revised design element; and
assigning a viewing order to the new revised design element.

15. A computer processing system including:

one or more processing units; and
one or more non-transitory computer-readable storage media storing instructions, which when executed by the one or more processing units, cause the one or more processing units to perform a method according to any one of claims 1 to 14.

100

110

Data storage **122**

Media library **124**

Design templates **126**

Target design plans **128**

Computer processing hardware **112**

Server application **114**

Conversion module **116**

Content generator **118**

Data storage application **120**

**140**

Client system **130**

Client application **132**

*Fig. 1*

**Fig. 2**

EP 4 571 565 A1

**Fig. 3A**

**Fig. 3B**

400

**Design Switch**

402 — Blog post    Email — 402

402 — Feedback    Poem — 402

402 — Lyrics    Summary — 402

Deck type format — 404

Doc type format — 404

406 — Convert    Exit — 408

*Fig. 4*

500

502 — Receive design conversion request

504 — Extract relevant source content

506 — Generate revised content

508 — Generate target design based on revised content

510 — Output target design

*Fig. 5*

602 — Retrieve source design elements

Select next unprocessed source element — 606

element relevant? — 608

Yes

610 — Add element to set of transfer elements

No

612 — Unprocessed source elements?

Yes

No

Order set of transfer elements — 614

**Fig. 6**

**702** Initialise intermediate format document (IFD)

**704** Select next transfer element

**706** Generate IF element corresponding to transfer element's content

**708** Append IF element to IFD

**710** Unprocessed transfer elements?

Yes

No

**712** Generate and communicate prompt for revised content generator

**714** Receive revised content from content generator

*Fig. 7*

802 — Process revised output to generate target design plan

To step 806 ← Yes — Media quer(ies)? — 804

No

From 812 → Target design = doc? — 813

No

Yes

814 — Generate document format design based on target design plan

816 — Analyse target design plan elements

818 — Identify template compatible with target design elements

820 — Select design template

822 — Transfer target design plan elements into selected design template

*Fig. 8*

Retrieve media queries from plan — 806

Select a media query and search library — 807

808 — Select media item(s) from search result

810 — Search for alternative media item ←Yes— Duplicate item? — 809

No

811 — Add media item to target design plan as shape element

To step 813 ←No— Media queries remaining? — 812

Yes

**Fig. 8 (continued)**

**Fig. 9**

Fig. 10

1100

## Design Switch into

1102

Try 'a kickoff doc" or 'exec summary'

1104

Try 'a kickoff doc" or 'exec summary'

Suggested

[icon] Concise executive summary

[icon] Informative and creative blog post

[icon] Short, professional email

[icon] Lyrics for a catchy song

[icon] Detailed presentation outline

Convert        Exit

406

408

## Fig. 11

1200

1202 — Receive design conversion
request

1204 — Extract relevant source content
and intent

1206 — Generate revised content based
on source content and intent

1208 — Generate target design based
on revised content

1210 — Output target design

*Fig. 12*

1302 — | Generate transformation prompt |

↓

1304 — | Receive intermediate system prompt |

↓

1306 — | Generate revised content prompt based on intermediate system prompt |

↓

1308 — | Receive revised content |

*Fig. 13*

1402 — Generate transformation intent prompt

1404 — Receive transformation intent

1406 — Generate revised content prompt based on transformation intent

1408 — Generate style prompt based on transformation intent

1410 — Receive revised content

1412 — Receive style

*Fig. 14*

| | Europäisches Patentamt European Patent Office Office européen des brevets | **EUROPEAN SEARCH REPORT** | **Application Number** EP 24 21 9482 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/129634 A1 (SIVAJI VISHNU [US] ET AL) 10 May 2018 (2018-05-10) * the whole document * | 1-15 | INV. G06F40/103 G06F40/131 G06F40/16 G06F40/186 G06F40/216 G06F40/35 G06F40/44 G06F40/56 |
| A | Achachlouei Mohammad Ahmadi ET AL: "Document Automation Architectures: Updated Survey in Light of Large Language Models", arXiv.org, 18 August 2023 (2023-08-18), 2 April 2025 (2025-04-02), XP093265158, Retrieved from the Internet: URL:https://arxiv.org/abs/2308.09341 * abstract; figure 1 * * section 2.7 * | 5-8 | |
| A | Lehtonen Miro: "Semi-automatic document assembly with structured source data", , 31 May 2001 (2001-05-31), XP093266321, Retrieved from the Internet: URL:https://citeseerx.ist.psu.edu/document ?repid=rep1&type=pdf&doi=ad7212fdf1645009f 24924e5d702b297c099dc10 [retrieved on 2025-04-02] * abstract; figures 1, 2 * * chapter 3: "Docucment assembly" * | 9-12 | |
| A | US 2023/305690 A1 (BRDICZKA OLIVER [US] ET AL) 28 September 2023 (2023-09-28) * abstract; figure 10 * * paragraph [0054] * | 14 | |

TECHNICAL FIELDS SEARCHED (IPC)

G06F

-/--

The present search report has been drawn up for all claims

| Place of search | Date of completion of the search | Examiner |
|---|---|---|
| Berlin | 4 April 2025 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | Application Number EP 24 21 9482 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Brown Tom B ET AL: "Language Models are Few-Shot Learners", NIPS'20: Proceedings of the 34th International Conference on Neural Information Processing Systems , 6 December 2020 (2020-12-06), pages 1-75, XP093202203, Retrieved from the Internet: URL:https://dl.acm.org/doi/abs/10.5555/3495724.3495883 * abstract; figure 2.1 * ----- | 6 | |
| | | | **TECHNICAL FIELDS SEARCHED (IPC)** |

The present search report has been drawn up for all claims

| Place of search | Date of completion of the search | Examiner |
|---|---|---|
| Berlin | 4 April 2025 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9482

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | Publication date | Patent family member(s) | Publication date |
|---|---|---|---|
| US 2018129634 A1 | 10-05-2018 | CN 108073680 A | 25-05-2018 |
| | | CN 115203399 A | 18-10-2022 |
| | | DE 102017126380 A1 | 17-05-2018 |
| | | DE 202017106839 U1 | 14-02-2018 |
| | | GB 2558400 A | 11-07-2018 |
| | | US 2018129634 A1 | 10-05-2018 |
| | | US 2023153523 A1 | 18-05-2023 |
| | | WO 2018089685 A1 | 17-05-2018 |
| US 2023305690 A1 | 28-09-2023 | CN 116644727 A | 25-08-2023 |
| | | DE 102022132144 A1 | 24-08-2023 |
| | | US 11644961 B1 | 09-05-2023 |
| | | US 2023305690 A1 | 28-09-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2023282298
- AU 2023282300
- AU 2023282299
- AU 2023282301
- AU 2024203055
- AU 2023210536
- AU 2023201537
- AU 2022271398

**Non-patent literature cited in the description**

- **JEAN-LUC MEUNIER**. Optimized XY-Cut for Determining a Page Reading Order. Xerox Research Centre Europe, January 2005